# EUROPEAN PATENT SPECIFICATION

(11) **EP 0 439 288 B1**
(45) Date of publication and mention of the grant of the patent: **24.06.1998**
(21) Application number: 91300383.6
(22) Date of filing: 17.01.1991
(51) Int. Cl.: G11B 15/675, G11B 15/61

(54) **Cassette ejecting mechanism of a tape player**
Kassetten-Auswerfmechanismus für Bandwiedergabegerät
Mécanisme d'éjection de cassette de lecteur de bande

(30) Priority: 20.01.1990 JP 11505/90
(43) Date of publication of application: 31.07.1991
(73) Proprietor: SONY CORPORATION, Tokyo (JP)
(72) Inventor: Tamura, Masafumi, Shinagawa-ku Tokyo (JP)
(74) Representative: Ayers, Martyn Lewis Stanley

(56) References cited:
- US-A- 3 893 186
- US-A- 4 017 900

## Description

This invention relates to a cassette ejecting mechanism of a tape player.

In video tape players, rotary head type audio tape players or the like, a magnetic tape is wrapped substantially in a helical form through a predetermined wrapping angle around the outer periphery of a head drum supporting a rotary magnetic head, the tape is driven while the magnetic head is rotated to perform recording and playback in a so-called helical scan system.

In a tape player of this type, in order to simplify the construction and speed up its mechanical changeover from the stop mode to an operation mode, part of the head drum may be located within a tape cassette except when loading or ejection of the tape cassette in and from the cassette loading portion is carried out.

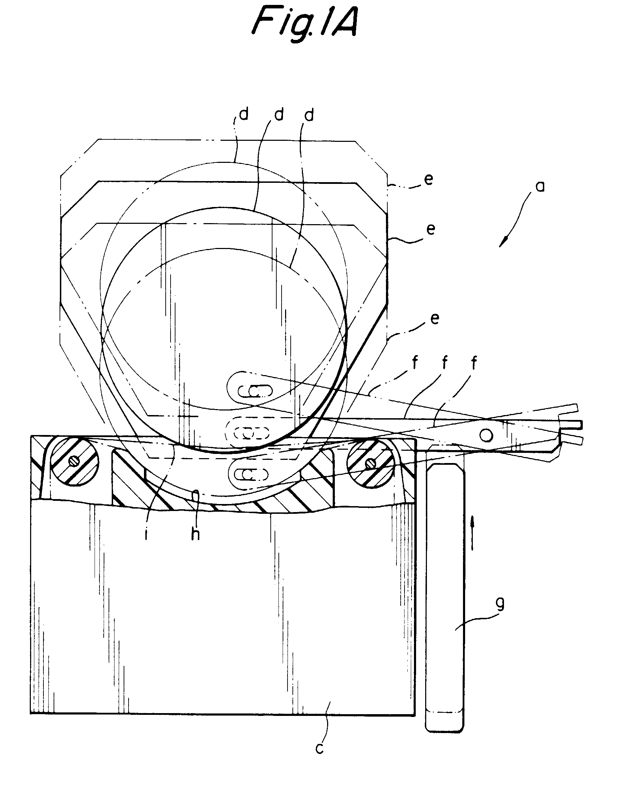

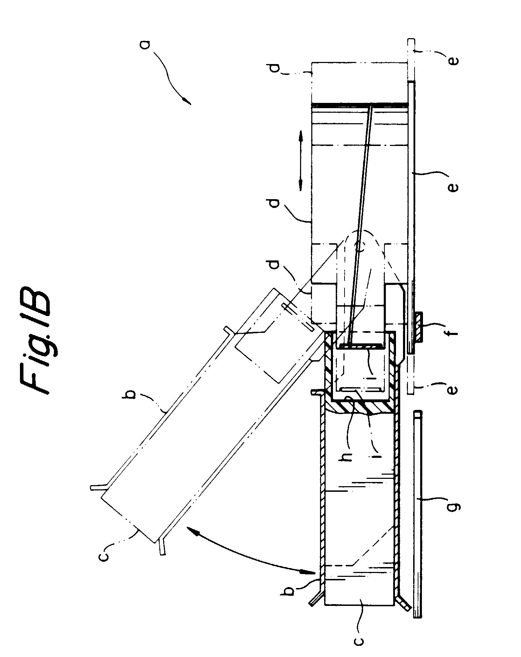

Figure 1 of the accompanying drawings shows an example of such a tape player.

In the drawing, reference character b denotes a cassette holder which is supported for pivotal movement between an ejecting position depicted by the alternate long and two short dashes line for insertion and removal of a tape cassette c and a loading position shown by the solid line for loading the tape cassette c in a cassette loading portion and is biased for movement toward the ejecting position. The cassette holder b, when moved to the loading position, is locked by lock means now shown. Reference character d denotes a head drum which is supported on a slidable plate e located rearward of the cassette holder b at the loading position and moved among a first position shown by the alternate long and short dash line, a second position shown by a solid line slightly rearward of the first position, and a third position shown by the alternate long and two short dashes line rearward of the second position. The head drum d supports a rotary magnetic head, not shown, moveable along the outer periphery thereof.

Reference character f designates a pivotal head drum moving lever whose one end is linked to the slidable plate e. When the head drum moving lever f is pivoted, the slidable plate e is moved in a front/rear direction in integral form with the head drum d.

Reference character g denotes a head drum withdrawal lever which is slidable and whose rearward depression causes the head drum moving lever f to pivot rearward.

In order for the tape cassette c to be ejected, the head drum withdrawal lever g is moved rearward to move the head drum moving lever f to its retracted position shown by the alternate long and two short dashes line in figure 1A, so as to place the head drum d rearward out of the pivotal track of the tape cassette c held on the cassette holder b and, after withdrawal of the head drum d from the interior of the tape cassette c, to release the locking of the cassette holder b to permit the cassette holder b to move to the ejecting position. Further, by moving the cassette holder b with the tape cassette c thereon to the loading position, the tape cassette c is loaded in the cassette loading portion. By subsequently moving the head drum moving lever f to the stop position shown by a solid line, a front end of the head drum d is inserted in a head drum accepting concave portion h so that a magnetic tape i is wrapped around the outer periphery of the head drum d at a small wrapping angle. This state is the stop mode. Fastforwarding, rewinding, search or the like of the magnetic tape i is carried out in this state, and recording and playback are effected by moving the head drum moving lever f to an advanced position shown by the alternate long and short dash line and increasing the wrapping angle of the magnetic tape i onto the head drum d.

Movement of the head drum moving lever f from the stop position to the advanced position is effected by pressing a play lever not shown, and rearward movement of the head drum withdrawal lever g is performed by pressing an ejecting lever not shown.

In this manner, since the magnetic tape i is wrapped onto the head drum d by simply moving the head drum d, a particular tape loading mechanism is not needed for drawing the magnetic tape i out of the tape cassette c and wrapping it onto the head drum d, which significantly simplifies the construction. Additionally, since the magnetic tape i is already wrapped onto the head drum d in the stop mode, search or other motion can immediately be started without moving the head drum d. Further, since the moving distance of the head drum d upon transition from the stop mode to a play mode for recording or playback, recording or playback can be started quickly.

In the tape player a, the timing of movement of the cassette holder b to the ejecting position, ie, the timing for releasing the lock thereof in the loading position, must be after the head drum d withdraws from the interior of the tape cassette c.

For this purpose, it may be possible to use particular operating means for unlocking the cassette holder b and withdrawing the head drum d from the interior of the tape cassette c and use means provided among respective operating means for controlling timings thereof, ie, control means for permitting unlocking operating means to be operated in a state where head drum withdrawal operating means has been operated. However, this complicates the construction and requires much labour for ejecting operation.

Moreover, the head drum d must be held in the exterior of the tape cassette c by locking the head drum moving lever f in the retracted position when the cassette holder b is located at any position other than the loading position, but the locking must be released when the cassette holder b is moved to the loading position. If particular means is used for effecting such control, the construction of the tape player a is not simplified so much as expected by omitting the tape loading machine.

It is, therefore, an object of the invention to provide a cassette ejecting mechanism of a tape player in which, locking and unlocking of the cassette holder in and from the loading position as well as locking of the head in the withdrawn position from the interior of the tape cassette can reliably be carried out only by means of the cassette holder and intermediate lever, the construction is not complicated, and the ejecting operation can be executed very easily.

According to the present invention there is provided a cassette ejecting mechanism of a tape player comprising:
cassette holder means which is operative to guide a tape cassette to an ejecting position permitting insertion and removal of the tape cassette and a cassette loading position permitting a tape to be driven and which is pivotal with respect to a chassis;
first biasing means for biasing said cassette holder means toward said ejecting position;
head base means which supports magnetic head means for recording or reproducing information signals on or from said tape and which is movably mounted to the chassis;
driving lever means for moving said head base means to a first position where said magnetic head means is located outside said tape cassette and a second position where at least part of said magnetic head means is located inside said tape cassette;
operating lever means for ejection of the cassette which operating lever means is moveable with respect to the chassis;
intermediate lever means which is moved in response to movement of said operating lever means and which moves said driving lever means;
second biasing means which biases said head base means toward said second position;
wherein movement of said cassette holder means toward said ejecting position by the first biasing means is prevented by contacting a first part of a lock portion of said intermediate lever means with a first portion to be locked of said cassette holder means when said cassette holder means is in said cassette loading position; and
movement of said head base means toward said second position by said second biasing means being prevented by contacting a second part of the lock portion of said intermediate lever means with a second portion to be locked of said cassette holder means when said cassette holder means is in said ejecting position.

Other, optional features of the invention are defined in the sub-claims.

The invention will be further described by way of non-limitative example with reference to the accompanying drawings, in which:-
Figure 1 shows an example of tape player having the head drum, with 1A being a partly cut-off fragmentary plan view and 1B a partly cut-off fragmentary side elevation;
Figure 2 is a plan view of the entirety of a tape player to which the invention has been applied;
Figure 3 is an exploded perspective view of the tape player;
Figure 4 is a fragmentary side elevation showing a state in which a cassette holder is in a loading position;
Figure 5 is a fragmentary vertical cross-sectional view showing the state in which the cassette holder is in the loading position;
Figure 6 is a fragmentary vertical cross-sectional view showing a state in which the cassette holder is in an ejecting position;
Figure 7 is a vertical cross-sectional view which shows a cross-section of a head arm and gears on a gear base;
Figure 8 is a perspective view of the gear base;
Figure 9 is a partly cut-off plan view showing a state in which the head drum is in a first position;
Fig. 10 is a partly cut-off plan view showing a state in which the head drum is in a second position;
Fig. 11 is a partly cut-off plan view showing a state in which the head drum is in a third position;
Figs. 12 to 17 are plan views of an operating mechanism showing a stop mode in Fig. 12, a play mode in Fig. 13, a state with a release lever depressed from the play mode in Fig. 14, an ejecting state in Fig. 15, a REW mode in Fig. 16 and an FF mode in Fig. 17;
Fig. 18 is a perspective view showing exploded part of the operating mechanism;
Fig. 19 presents enlarged plan views which show, successively from 19A to 19D, movement of a play lever, responsive expansion of a limiter spring, and so on;
Fig. 20A is a cross-sectional view taken along the XX-XX line of Fig. 19A;
Fig. 20B is a cross sectional view taken along the XX-XX line of Fig. 19D;
Fig. 21 presents fragmentary vertical cross-sectional views which show ejecting motion successively from 21A to 21B;
Fig. 22 is a perspective view of a tape cassette;
Fig. 23 is a horizontal cross-sectional view of a tape cassette; and
Fig. 24 presents side elevations of the tape cassette with its front lid in a closed position in 24A and in an open position in 24B; respectively.

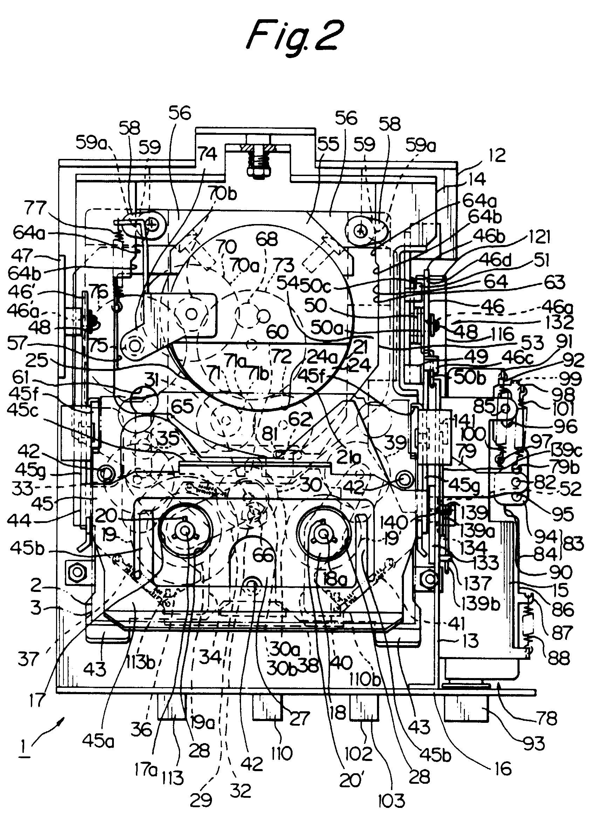

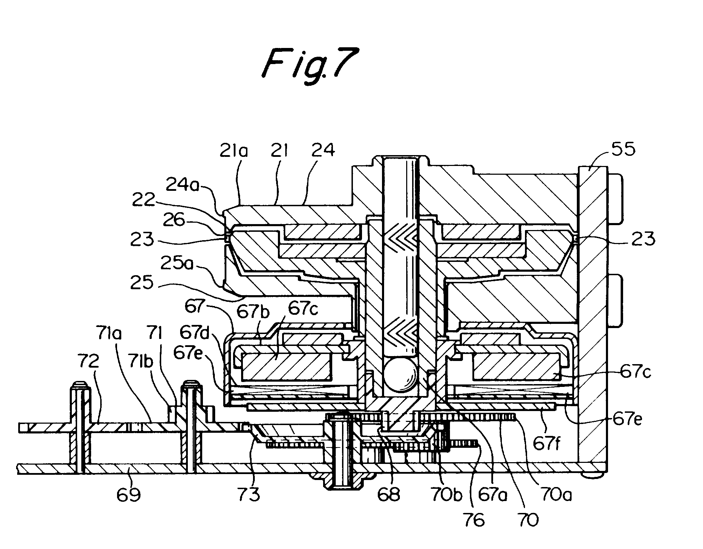

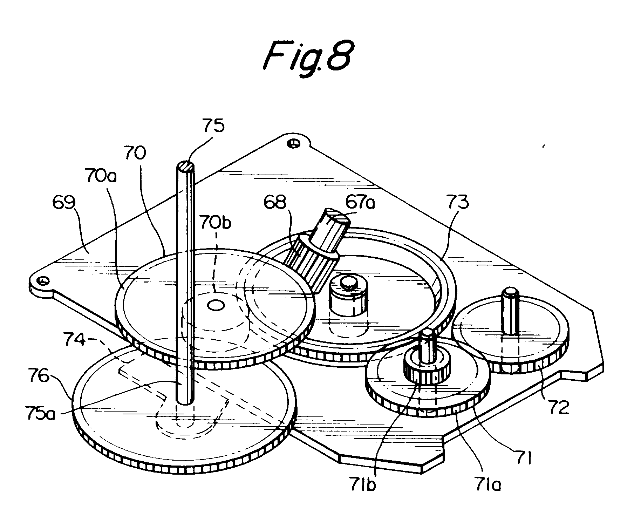

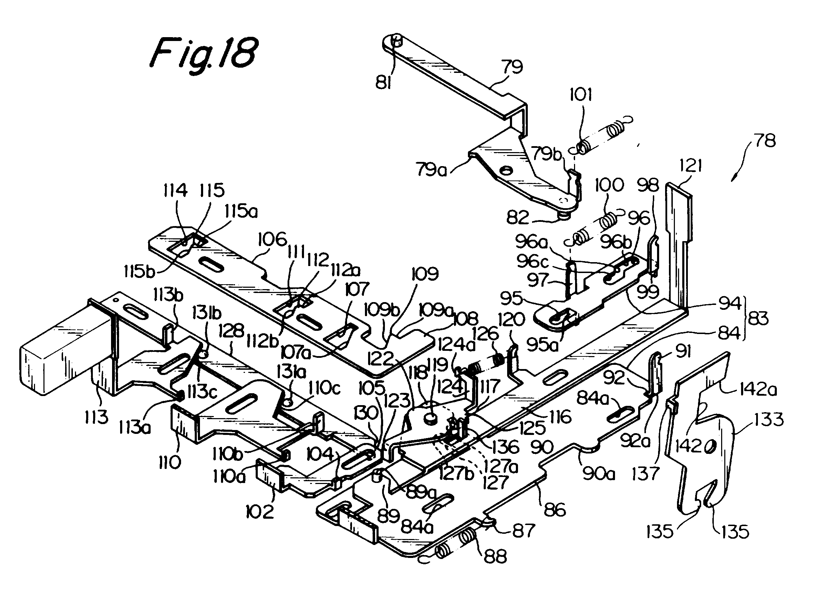

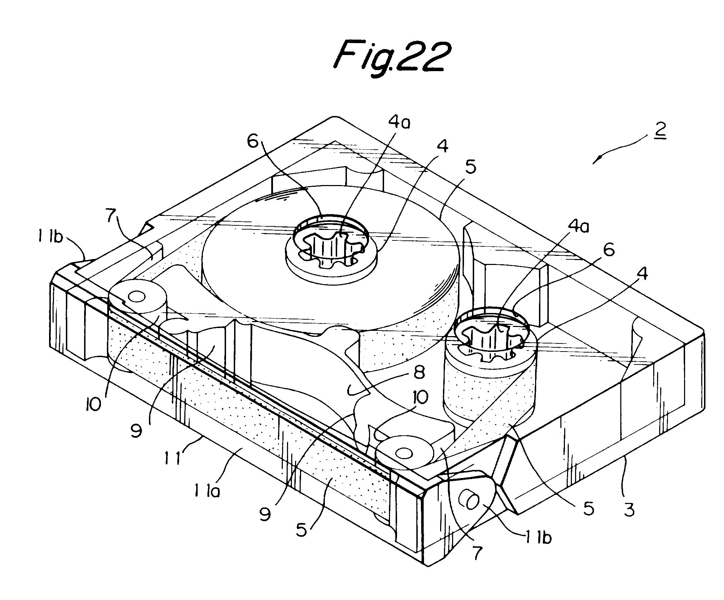

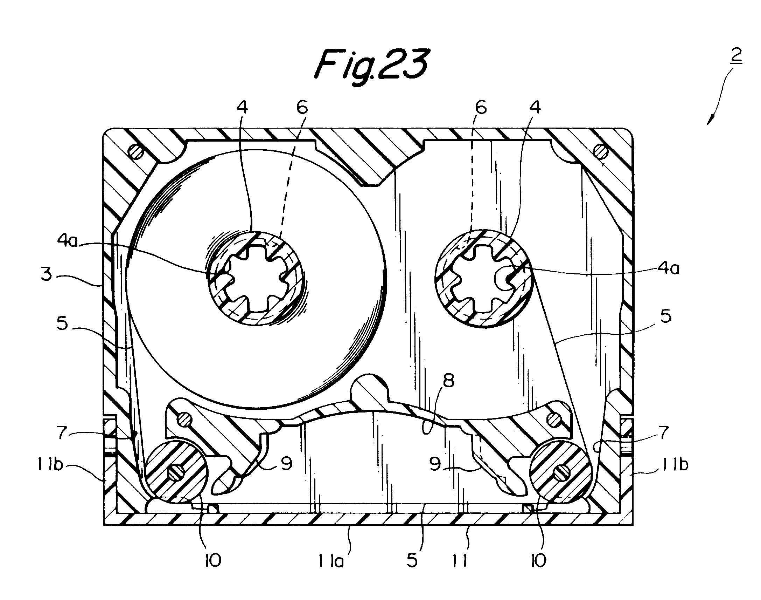

Details of a cassette ejecting mechanism of a tape player according to the invention are described hereinbelow in accordance with an embodiment shown in the drawings (Figs. 2 to 24).

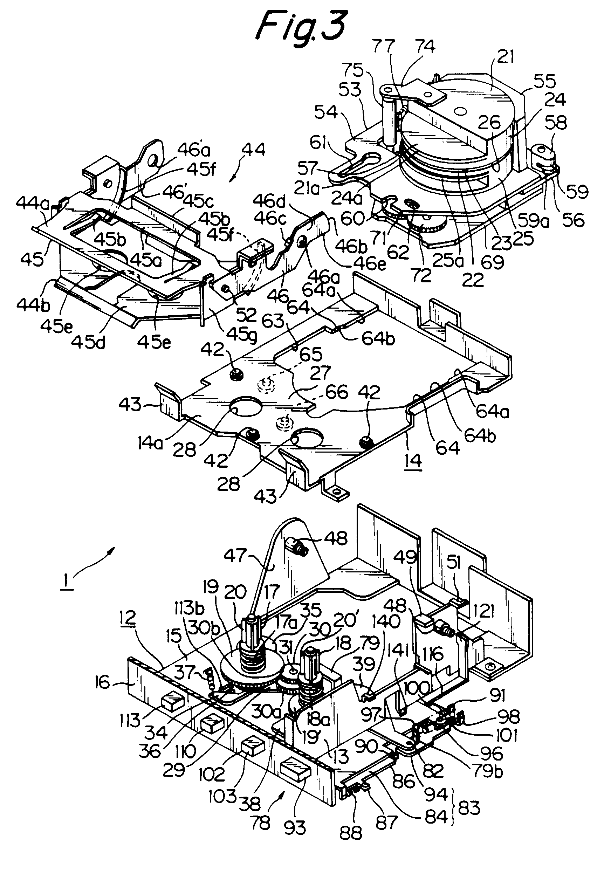

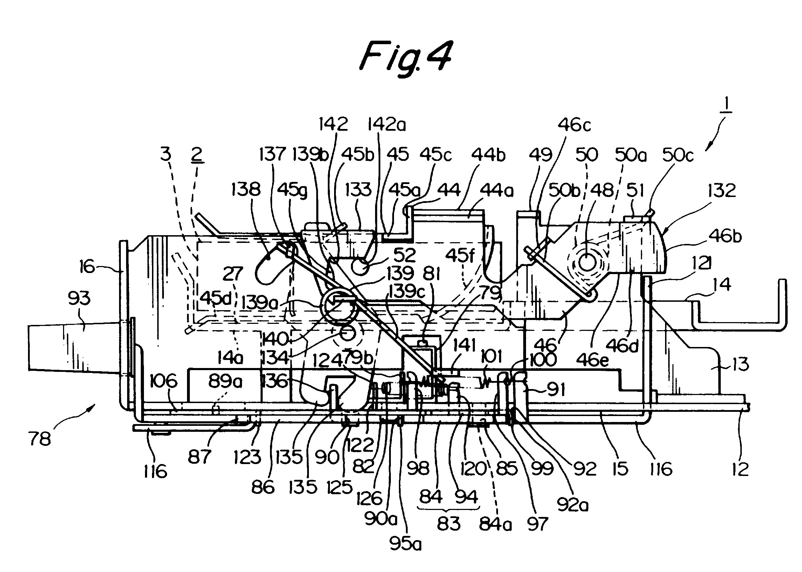

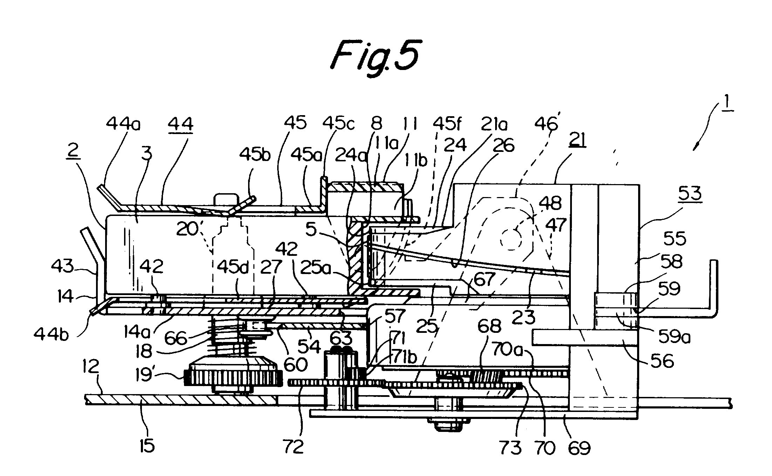

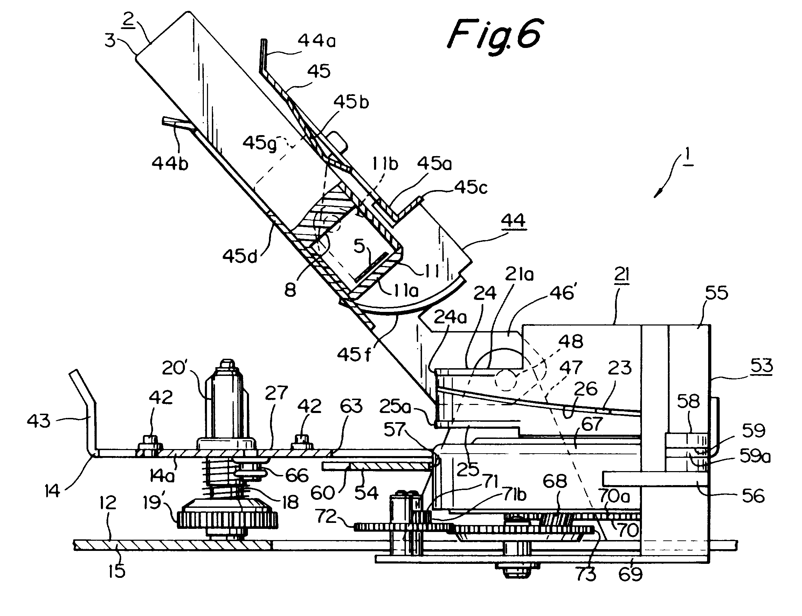

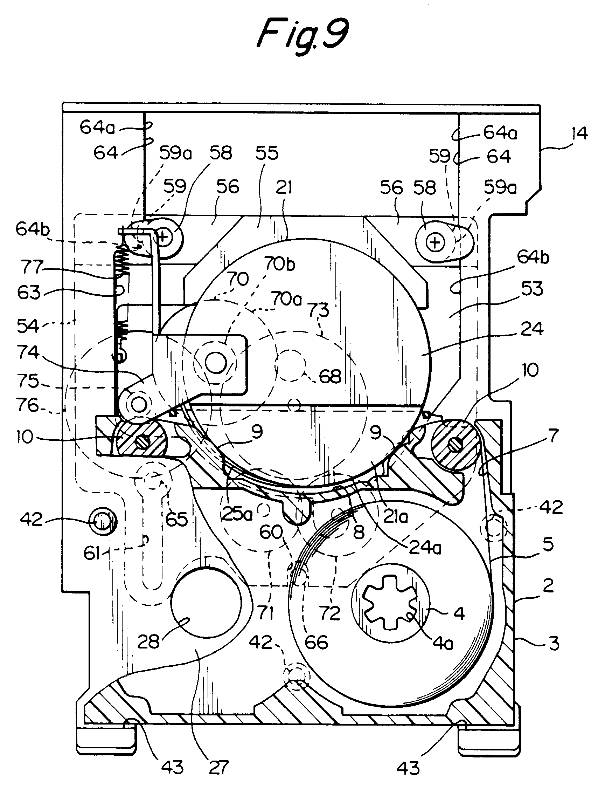

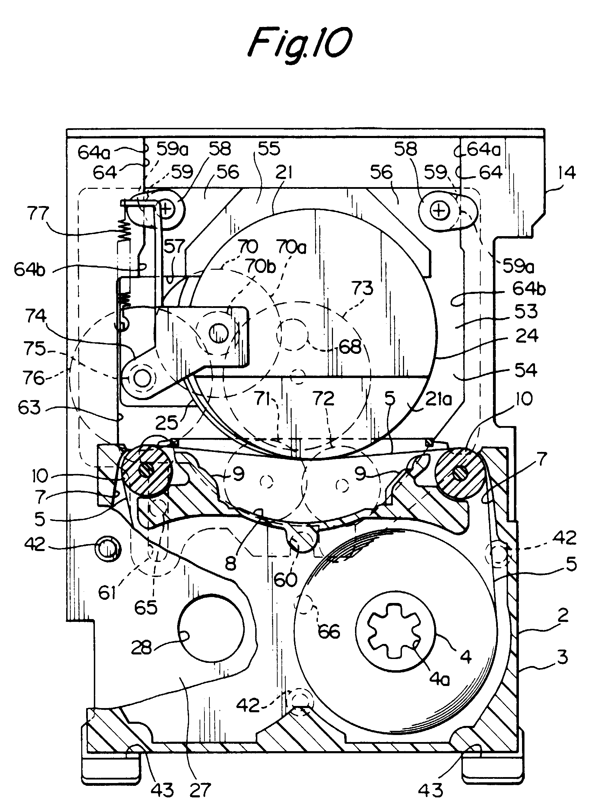

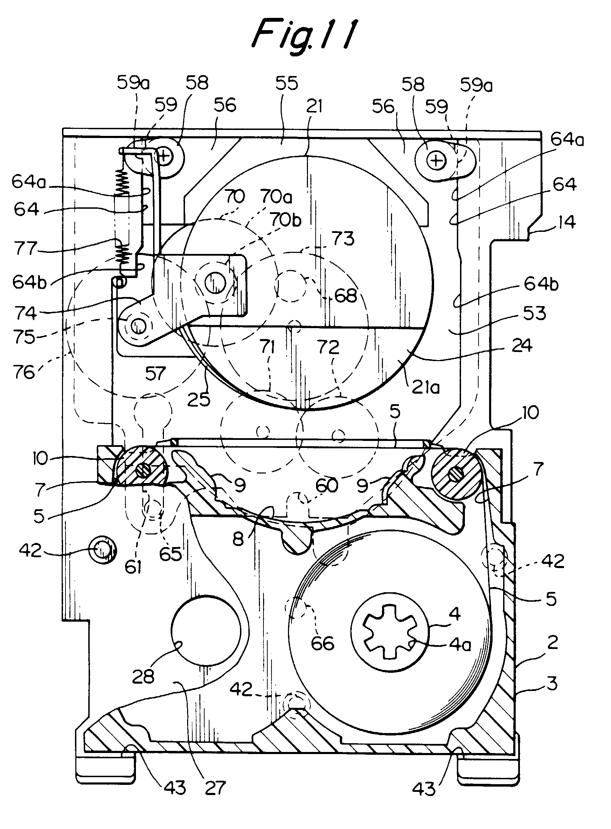

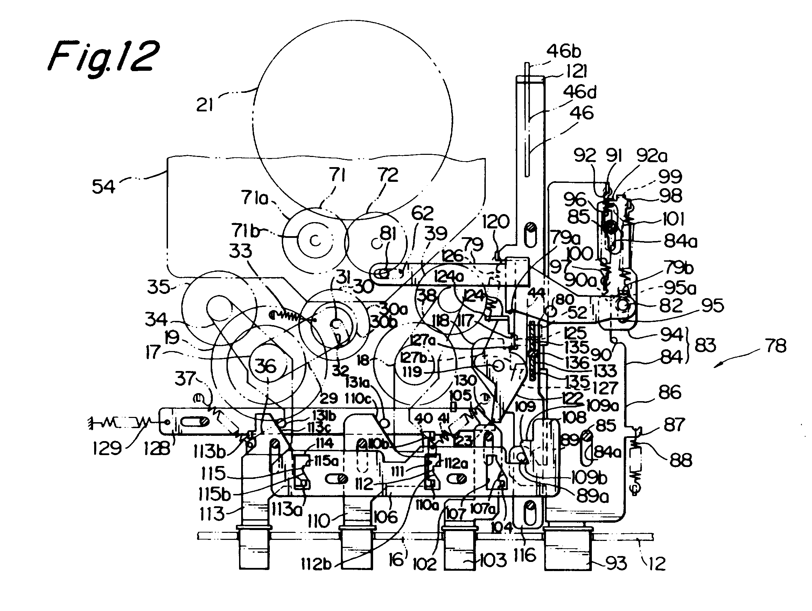

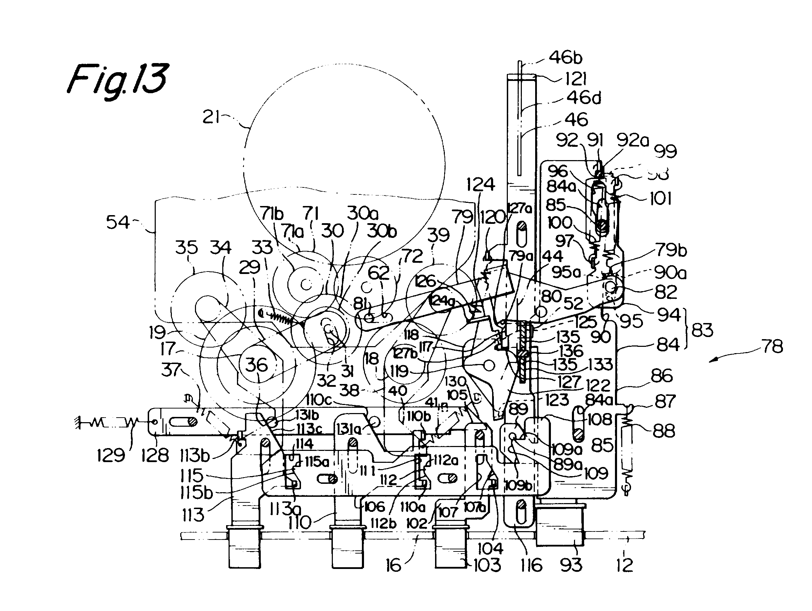

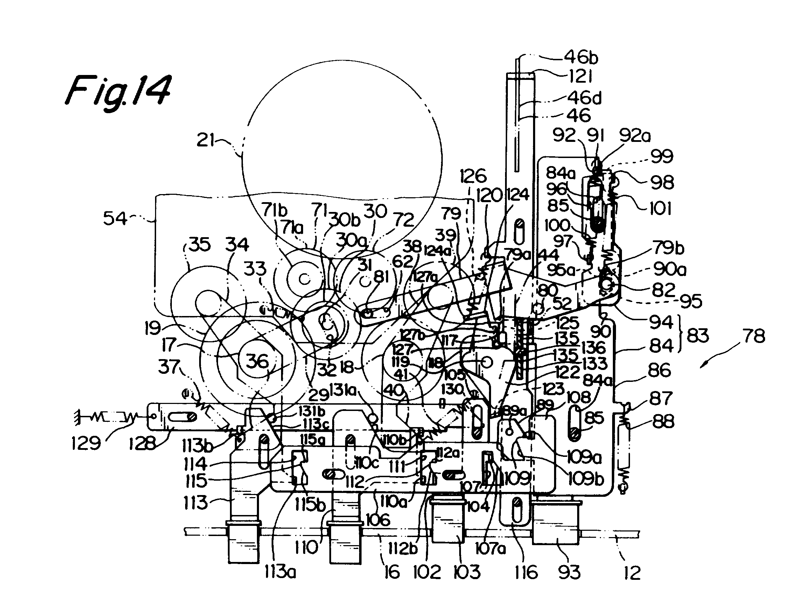

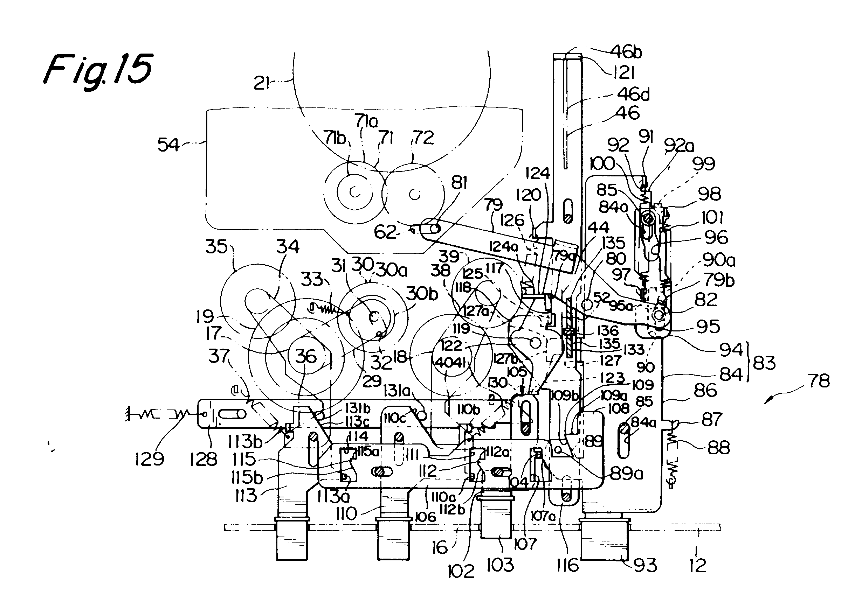

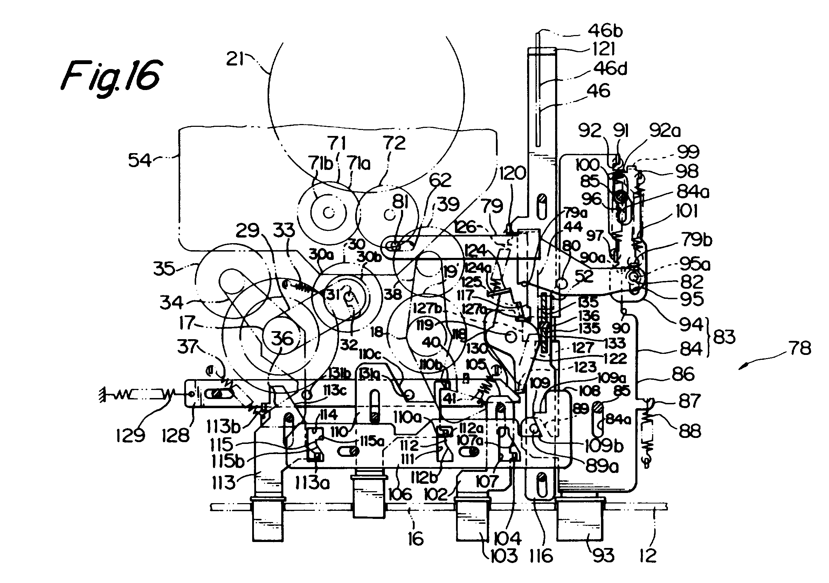

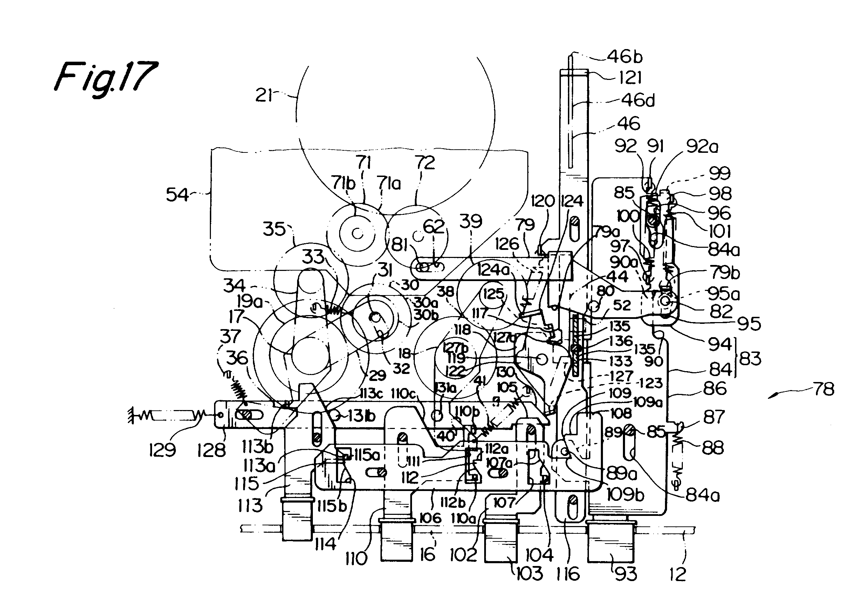

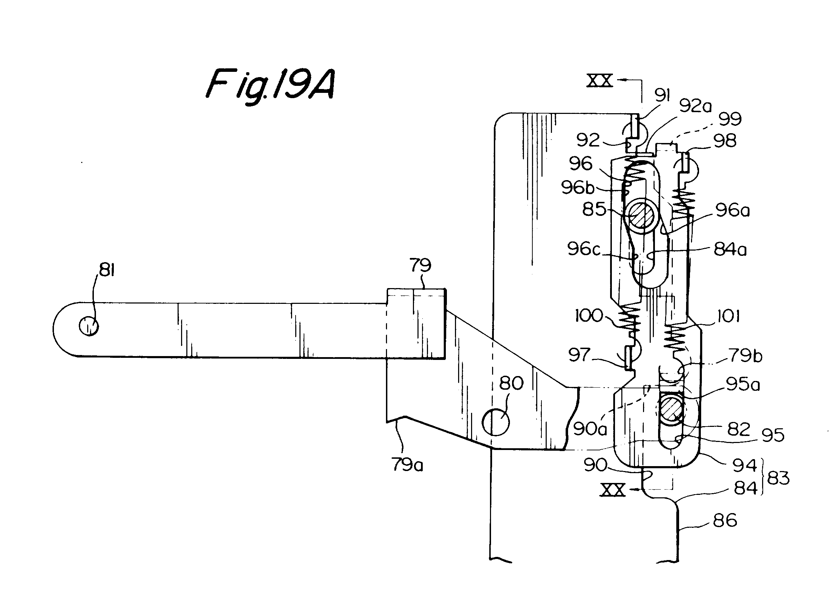

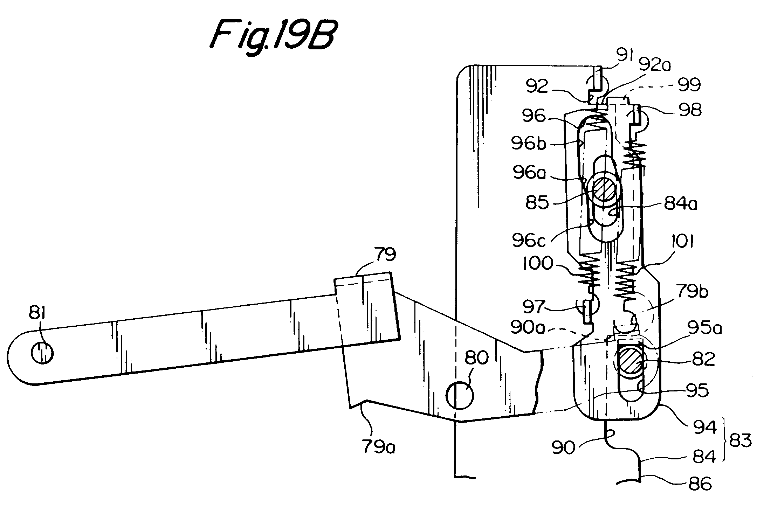

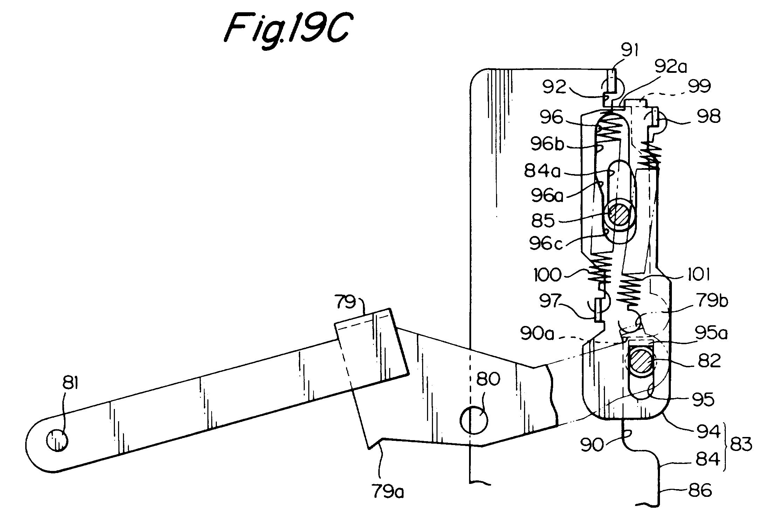

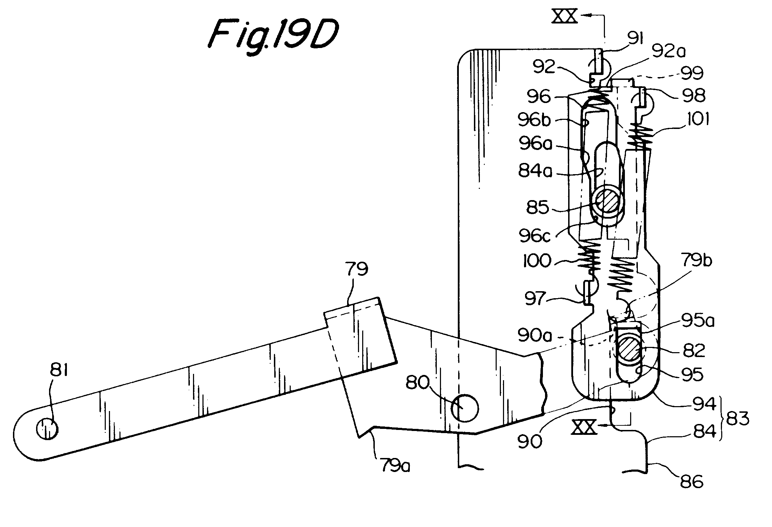

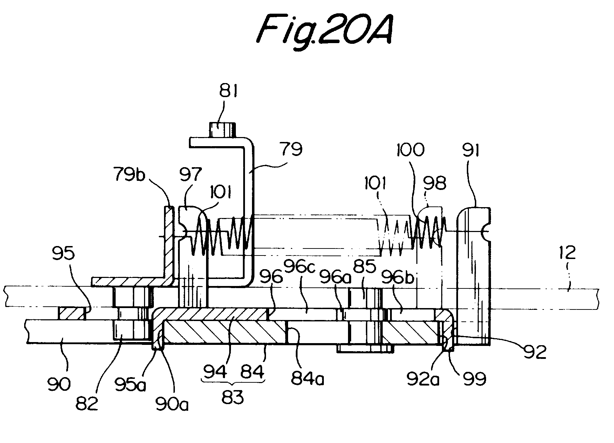

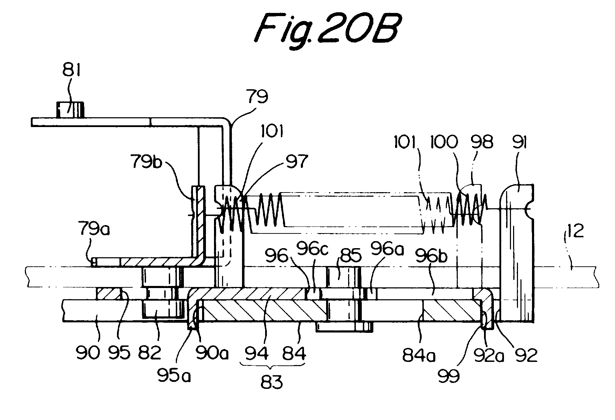

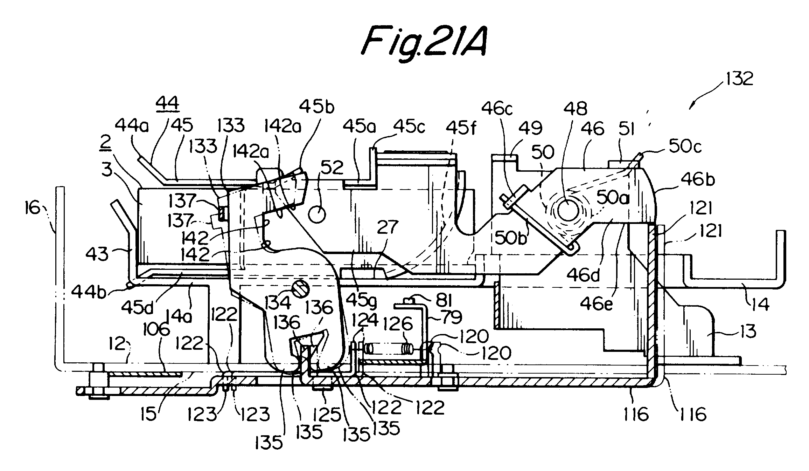

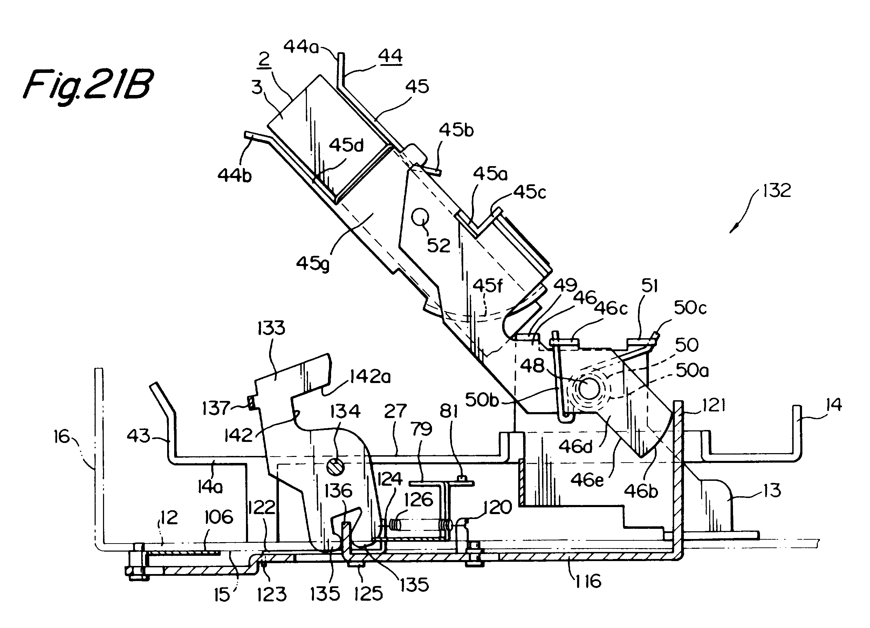

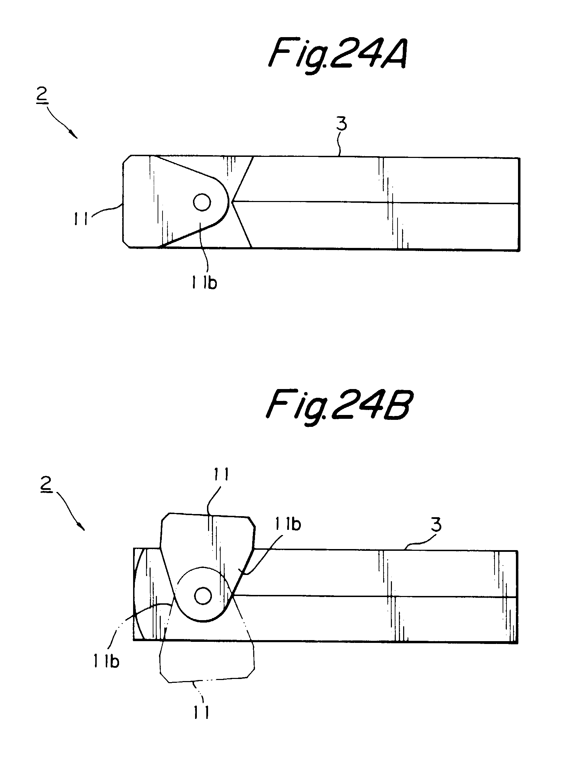

First explanation is directed to an example of tape cassette used in a tape player 1, and next explanation is directed to the tape player 1.
a tape cassette (Figs. 2, 4 to 6, 9 to 11, and 21 to 24)
   Reference numeral 2 denotes a tape cassette.
   Reference numeral 3 designates a cassette casing in the form of rectangular, flat box elongated in the right and left direction as seen from the upper side.
   Two tape reels 4 are rotatably enclosed in the cassette casing 3. A magnetic tape 5 is wrapped around the tape reels 4.
   Two through holes 6 are formed in each of two walls of the cassette casing 3 which face in the thickness direction thereof. Engaging holes 4a formed in the tape reels 4 communicate the exterior via the through holes 6.
   Reference numeral 7 denotes tape exits which are formed in both of right and left end portions of the front surface of the cassette casing 3. The magnetic tape 5 is led out of the tape exits 7 to the exterior of the cassette casing 3, extending along the front surface of the cassette casing 3.
   Reference numeral 8 denotes a head drum accepting concave portion which is formed in the front end portion of the cassette casing 3 excluding both end portions in which the tape exits 7 are present. The head drum accepting concave portion 8 is opened forwardly but covered at upper and lower sides thereof.
   Reference numeral 9 denotes contact surfaces which are formed at positions of its inner surface of the head drum accepting concave portion 8 close to the right and left ends thereof. When a head drum, which will be explained later, engages the contact surfaces 9, it is positionally fixed with respect to the tape cassette 2.
   Reference numeral 10 denotes pinch rollers which are rotatably supported in positions within the tape exits 7 close to the head drum accepting concave portion 8. Thus the magnetic tape 5 bridges over the front surface of the cassette case 3, while wrapped around the pinch rollers 10, so as to extend across the front face of the head drum accepting concave portion 8. The portion in which the magnetic tape 5 extends across the front face of the head drum accepting concave portion 8 is a tape bridging surface.
   Reference numeral 11 denotes a front lid which is made of a synthetic resin having a distorting elasticity to form a unitary body including a cover portion 11a which covers the front face of the cassette casing 3 and side members 11b which extend rearward from both ends of the cover portion 11a. Distal end portions of the side members 11b are pivotally mounted to the right and left side walls of the cassette casing 3 to permit pivotal movement of the front lid 11 between a closed position shown in Fig. 24A and an open position shown by a solid line and an alternate long and two short dashes line in Fig 24B.
   The distance from a rotational fulcrum of the front lid 11 to the upper or lower end of the front surface of the cassette casing 3 is slightly larger than the interval from the rotational fulcrum to the cover portion 11a, as seen from the side position. Therefore, when the front lid 11 moves between the two positions, the cover portion 11a receives a forward stretching force during passing through the upper or lower end of the front surface of the cassette casing 3. As a result, since the entirety distorts in the form of a gentle arc, the cover portion 11a can pass over the upper or lower end of the cassette casing 3. At the closed position, the front lid 11 is click-locked there.
b Outline of the Tape Player (Figs. 2 to 6 and 9 to 11)
   Reference numeral 12 refers to a main chassis, 13 to a side wall fixed on an upper surface of the main chassis 12, and 14 to a subchassis fixed to the main chassis 12.
   The main chassis 12 has a substantially rectangular outer shape which is elongated in the front/rear direction (so far as used in the description for expressing directions, the terms "front" or "forward" defines the direction toward to the bottom, "rear" or "back" defines the direction toward the top, "left" defines the direction toward the left end, and "right" defines the direction toward the right end, all based on Fig. 2). The main chassis 12 includes a front wall 16 upstanding from a front end edge of its bottom plate 15. Large part of the bottom plate 15 except the front end and left end portions thereof is opened, and a side wall 13 extending in the front/rear direction is fixed at a slightly left position of the right side edge.
   The subchassis 14 is supported to the main chassis 12 in an upper position of a left portion of the bottom plate 15 than the side wall 13 so as to extend in parallel orientation with the bottom plate 15.
   Reference numerals 17 and 18 denote reel bases which are rotatably mounted in right and left isolated positions of front part of the bottom plate 15 of the main chassis 12. They include reel base gears 19, 19' and reel engaging shafts 20, 20' which are in frictional engagement with each other so that, when the reel base gears 19, 19' are rotated by a drive system, described later, the reel engaging shafts 20, 20' are rotated under frictional force between themselves and the reel base gears 19, 19'.
   The front part of the subchassis 14 serves as a cassette loading portion for loading the tape cassette 2 thereon.
   Reference numeral 21 designates a head drum which is supported for back and forth movement on the upper surface of the subchassis 14.
   The head drum 21 is of an inner drum rotation type. Magnetic heads 23 are supported on the outer peripheral surface of an inner drum 22 and located in a space 26 provided between upper and lower drums 24 and 25. In front part 21a of the head drum 21, the interval between the upper surface of the upper drum 24 and the lower surface of the lower drum 25 is slightly smaller than the upper to lower width of the head drum accepting concave portion 8. In the same front part 21a, confronting edges 24a and 25a bulge out slightly outwardly from the upper edge of the upper drum 24 and the lower edge of the lower drum 25. The interval between the confronting edges 24a and 25a is slightly larger than the width of the magnetic tape 5.
   Thus the head drum 21 is movable among a first position where most part of the front part 21a thereof enters in the head drum accepting concave portion 8 as shown in Fig. 9, a second position where the front part 21a thereof slightly enters in the head drum accepting concave portion 8 as shown in Fig. 10, and a third position where the head drum 21 fully exits from the head drum accepting concave portion 8 as shown in Fig. 11.
   When the head drum 21 is located in the first position, the magnetic tape 5 is depressed into the interior of the head drum accepting concave portion 8, while wrapped around the head drum 21 over a predetermined wrapping angle. In this configuration, recording and/or playback of the magnetic tape 5 is executed by the magnetic heads 23.
   When the head drum 21 has moved to the second position, the magnetic tape 5 is wrapped around the head drum 21 over a smaller wrapping angle than that for executing the recording and/or playback, and fast-forwarding, rewinding or search of the magnetic tape 5 is selectively executed in this state.
   In order for the tape cassette 2 to be loaded in or ejected from the tape player 1, the head drum 21 is moved to the third position. Except when the tape cassette is loaded or ejected or the tape runs, the head drum 21 is held in the second position.
c Cassette Loading Portion (Figs. 2, 3 and 12 to 17)
   The upper surface of an approximately front half of the subchassis 14 serves as a cassette loading portion 27.
   Front part 14a of the subchassis 14 has through holes 28, spaced in the right/left direction, through which the reel engaging shafts 20 and 20' of the reel bases 17 and 18 extend upwardly beyond the subchassis 14.
   Reference numeral 29 denotes a play gear arm whose proximal end is pivotally supported by a support shaft 17a of the reel base 17. At the pivotal end of the arm 29 is rotatably supported a play gear 30 which is a unitary member including a large gear 30a and a small gear 30b. The small gear 30b always engages the reel base gear 19 of the reel base 17.
   The lower end of the support shaft 31 of the play gear 30 extends downward beyond the main chassis 12 and terminates in a restriction hole 32 formed in the main chassis 12. The restriction hole 32 is arc-shaped encircling the support shaft 17a to limit the pivotal area of the arm 29.
   Reference numeral 33 refers to a tension spring rove between the play gear arm 29 and the main chassis 12 to bias the play gear arm 29 in the counterclockwise direction as seen from the upper side. Therefore, the play gear arm 29 is held in a position where the lower end of the support shaft 31 engages the rear end of the restriction hole 32 unless the pivotal end of the arm 29 is urged from the back thereof.
   Reference numeral 34 denotes an FF gear arm whose intermediate portion is pivotally supported by the support shaft 17a. The FF gear arm 34 pivotally supports, at an end thereof, an FF gear 35 which always engages the small gear 19a of the reel base gear 19. A left side edge of front part of the FF gear 34 has a cam edge 36 which is inclined to the left progressively in the forward direction.
   Reference numeral 37 denotes a tension spring rove between the FF gear arm 34 and the main chassis 12 to bias the FF gear arm 34 in the clockwise direction as seen from the upper side.
   Reference numeral 38 denotes a REW gear arm whose intermediate portion is pivotally supported by a support shaft 18a of the reel base 18. The REW gear arm 38 pivotally supports, at a rear end thereof, a REW gear 39 which always engages the reel base gear 19'. A right side edge of front part of the REW gear arm 38 has a cam edge 40 which is inclined to the right progressively in the forward direction.
   Reference numeral 41 refers to a tension spring rove between the REW gear arm 38 and the main chassis 12 to bias the REW gear 38 in the counterclockwise direction as seen from the upper side.
   These arms 34 and 38 are pivoted by manipulation of an operation lever, described later, to establish the FF, search or REW mode in which the reel bases 17 and 18 are rotated at a high speed.
   Reference numeral 42 denotes cassette support pins upstanding from the subchassis 14 so that the tape cassette 2 is put thereon and positionally fixed in the up and down direction.
   Reference numeral 43 refers to restriction members upstanding from right and left ends of the front end edge of the subchassis 14 so that the rear surface of the tape cassette 2 put on the cassette loading portion 27 (note that the front/rear orientation of the tape cassette 2 loaded in the tape player 1 is opposite to the front/rear orientation of the tape player 1) engages them and is positionally fixed thereby in the front/rear direction.
d Cassette Holder (Figs. 2 to 6, 15 to 17 and 21)
   Reference numeral 44 refers to the cassette holder which is a unitary member including upper and lower two metal frame members 44a and 44b.
   Reference numeral 45 designates a cassette holding portion which is main part of the cassette holder 44. The cassette holding portion 45 has a flat and rectangular shape as seen from the front side. Its upper plate 45a is in the form of a transversely elongated rectangular frame as seen from the upper side. Pressing members 45b extend rearward from the front edge of an opening of the upper plate 45a at positions close to the right and left ends thereof. Rear ends of the pressing members 45b are sloped down lower than the lower surface of the upper plate 45a, with the extreme ends thereof, however, being slightly curved upwardly.
   Reference numeral 45c denotes a lid turn-back member extending upwardly from the rear edge of the upper plate 45a except both ends thereof.
   Reference numeral 45d refers to a bottom plate having two through holes 45e spaced in the right/left direction.
   Reference numeral 45f denotes guide members made by inwardly draw-processing rear end edges of side plates 45g provided in the lower frame member 44b. The front face of each guide member 45f defines an arc which is inclined upward starting from its lower end progressively in the rear direction.
   Reference numerals 46 and 46' refer to arms which are formed to the upper frame member 44a. They are put in surface contact with and outside the side plates 45g, and project rearward. They have support holes 46a and 46'a at positions close to the rear ends thereof. The right arm 46, extending rearward beyond the rear end of the left arm 46', is slightly longer than the left arm 46'. The rear end 46b of the right arm 46 is in the form of an arc concentrical with the center of the support hole 46a. The right arm 46 has a spring engage portion 46c at a position of the upper side edge thereof slightly forward of the support hole 46a.
   Reference numeral 47 refers to a support wall upstanding from the left side edge of the bottom plate 15 of the main chassis 12. Support shafts 48 are formed to project from an upper end of the support wall 47 and a corresponding portion of the side wall 13, and they are pivotally inserted in the support holes 46a, 46'a formed in the arms 46, 46' of the cassette holder 44.
   Thus the cassette holder 44 is supported by the main chassis 12 for pivotal movement substantially in the up and down direction to move to the ejecting position shown in Fig. 21B, where the right arm 46 is inclined, with its front end being held high, under engagement of the upper end thereof with a stopper 49 formed along the upper end of the side wall 13 from the bottom thereof, and the loading position of Fig. 21A where the cassette holding portion 45 is held substantially in a horizontal orientation, being close to the cassette loading portion 27 of the subchassis 14.
   Reference numeral 50 denotes a scissor-shaped spring having a coil portion 50a engaging around the right one of the support shafts 48. The spring 50 has one arm 50b whose distal end resiliently engages a front bottom of a spring confronting portion 46c formed on the arm 46 of the cassette holder 44 and has the other arm 50c whose distal end engages a rear bottom of a spring confronting portion 51 formed on the upper end of the side wall 13.
   Stretching force of the scissor-shaped spring 50 gives the cassette holder 44 a clockwise pivotal force as seen from a right side, i.e., a moving force to the ejecting position. When the cassette holder 44 has moved to the loading position, a head drum withdrawal lever, described later, prevents clockwise movement of the rear end 46d (hereinafter called a portion to be locked) of its right arm 46. At the same time, a locked pin 52 extending horizontally rightward from the right side plate 45g of the cassette holding portion 45 is locked by a holder pressing lever, described later, and the cassette holder 44 is held in the loading position by them.
e Tape Cassette Loading and Others (Figs. 5 and 6)
   As the tape cassette 2 is progressively inserted into the cassette holding portion 45 of the cassette holder 44 located at the ejecting position, both ends of lower part of the front lid 11 get in engagement with the guide portions 45f. As the tape cassette 2 is further inserted into the cassette holding portion 45, both ends of the front lid 11 is lifted by the guide portions 45f to guide the front lid 11 into the open position. When the front lid 11 reaches the open position, the lid turn-back member 45c provided at the rear end of the upper plate 45a of the cassette holding portion 45 is opposed to the front lid 11 in an almost contacting state. Therefore, when the tape cassette 2 is removed from the cassette holding portion 45, the front lid 11 is relatively pressed by the lid turn-back member 45c of the cassette holding portion 45 and is returned back to the closed position.
   As described above, when the cassette holder 44 carrying the tape cassette 2 inserted into the cassette holding portion 45 thereof is pivoted downward, the tape cassette 2 is loaded in the cassette loading portion 27. More specifically, the reel engaging shafts 20, 20' of the reel bases 17, 18 engage the engage holes 4a of the tape reels 4 of the tape cassette 2 through the insertion holes 45e of the cassette holder 44, and the lower surface of the cassette casing 3 is put on the upper end surfaces of the cassette supporting pins 42.
   Note that the cassette holder 44 reaches the loading position just after the tape cassette 2 is put on the cassette supporting pins 42, and the tape cassette 2 is pressed to the cassette supporting pins 42 by the pressing members 45b of the cassette holder 44.
f Support of the Head Drum (Figs. 2, 3 and 5 to 17)
   Reference numeral 53 denotes a head base which is supported on the subchassis 14 to be movable in the front/rear direction.
   The head base 53 is composed of a slide plate 54 in the form of a plate and a support block 55 fixed to the slide plate 54.
   Coupling members 56 are formed to extend outwardly from middle portions with respect to the up and down direction of the right and left side surfaces of the support block 55.
   The slide plate 54 has a large cutout 57 which opens rearward, and right and left rear ends of the slide plate 54 are fixed to the coupling members 56 of the support block 55.
   Reference numeral 58 refers to slide bridges which are fixed to the upper surfaces of the coupling members 56 and are made of synthetic resin having a good slipping performance. The slide bridges 58 have slide grooves 59 opened to the exterior.
   Reference numeral 60 refers to a slit formed in the center of the front edge of the slide plate 54, elongated in the front/rear direction and opened to the front end, and 61 refers to an elongated guide hole formed in a front end portion of the slide plate 54 and elongated in the front/rear direction.
   Reference numeral 62 denotes an elongated engage hole formed at a position close to the front end of the slide plate 54 and elongated in the right/left direction.
   A hole 63 is formed in the subchassis 14 to occupy most part of an approximately rear half thereof. Both side edges 64 of the hole 63 are used as guide edges and extend in parallel relationship in the front/rear direction. Rear end portions 64a of the guide edges 64 project slightly inwardly. The interval between the rear end portions 64a is substantially equal to the interval between deep end surfaces 59a of the slide grooves 59 formed in the slide bridges 58. The interval between portions 64b of the guide edges 64 excluding the rear end portions 64a is slightly larger than that between the said deep end surfaces 59a.
   The slide grooves 59 of the head base 53 slidably engage the guide edges 64 of the subchassis 14. A guide pin 65 attached to and standing from the subchassis 14 slidably engages the elongated guide hole 61 of the head base 53. A guide pin 66 attached to and standing from the subchassis 14 slidably engages the slit 60 of the head base 53. The head base 53 is supported thereby to the subchassis 14 to be movable in the front/rear direction.
   When the slide grooves 59 engage the rear end portions 64a of the guide edges 64, the guide edges 64a is substantially in contact with the deep end surfaces 59a of the slide grooves 59. As a result, the head base 53 is held substantially without right and left oscillation. However, when the slide grooves 59 engage the portions 64b of the guide grooves 64, slight oscillation in the right/left direction is allowed for the head base 53 because of a slight gap between the portions 64b and the deep end surfaces 59a of the slide grooves 59.
   The head drum 21 is fixed to the head base 53 having the said construction.
   Note that the head drum 21 is of a motor-incorporated type, with a drum motor shown at 67.
   Reference numeral 67a denotes a rotational shaft to which the inner drum 22 and the rotor 67a are fixed. A rotor magnet 67c is secured to the rotor 67b. Reference numeral 67d refers to a stator opposed to the rotor 67b. A stator coil 67e is supported in confrontation with the rotor magnet 67c. Reference numeral 67f denotes a back yoke fixed to the rotational shaft 67a in confrontation with the rotor 67b via the stator 67d.
   A drive gear 68 is formed integrally with the lower end of the rotational shaft 67a extending downward beyond the lower end of the motor 67.
   Reference numeral 69 denotes a gear base whose rear end is fixed to the lower end of the support block 55 of the head base 53.
   Reference numeral 70 designates a transfer gear rotatably supported on the gear base 69 at the left side of the drive gear 68. The transfer gear 70 is a unitary member which includes a large gear 70a and a small gear 70b. The large gear 70a engages the drive gear 68.
   Reference numerals 71 and 72 denote relay gears which are rotatably supported in right and left adjacent positions and held in mutual meshing engagement. The relay gear 71 is for the FWD system whereas the relay gear 72 is for the REW system. The FWD relay gear 71 is a unitary member including a large gear 71a and a small gear 71b in a concentrical arrangement.
   The large gear 71a of the FWD relay gear 71 and the small gear 70b of the transfer gear 70 are linked by a link gear 73 supported rotatably on the gear base 69.
   As a result, when the drum motor 67 rotates, two relay gears 71 and 72 are rotated in opposite directions: the FWD relay gear 71 in the counterclockwise direction and the REW relay gear 72 in the clockwise direction, as seen from the upper side.
   Reference numeral 74 refers to a capstan arm whose proximal end is pivotally supported to the gear base 69 and the upper drum 24 and whose rotational shaft is coaxial with the rotational shaft of the transfer gear 70.
   A capstan 75 is rotatably supported at a pivotal end portion of the capstan arm 74. A capstan gear 76 is fixed to a shaft 75a extending under the capstan 75 and engages the small gear 70b of the transfer gear 70. The capstan 75 is thus rotated with rotation of the drum motor 67.
   Reference numeral 77 refers to a tension spring rove between the capstan arm 74 and the head base 53 to give the capstan arm 74 a counterclockwise pivotal force as seen from the upper side.
   When the head drum 21 is in the first position due to forward movement of the head base 53, the slide grooves 59 of the head base 53 are in engagement with the portions 64b of the guide grooves 64 and can slightly oscillate in the right/left direction. Therefore, the head drum 21 corrects its position by itself during the process such that the confronting edges 24a and 25a of the head drum 21 are pressed onto the contact surfaces 9 of the tape cassette 2.
   Note that the confronting edges 24a and 25a of the head drum 21 are pressed onto the contact surfaces a of the cassette case 3 by a stretching force of a limiter spring which will be referred to later.
   During the process where the head drum 21 is moved to the first position, the capstan 75 engages one of the pinch rollers 10 of the tape cassette 2 on the part of the tape reel 4 in engagement with the reel engaging shaft 20 of the takeup reel base 17 via the magnetic tape 5. Thereafter, during movement of the head drum 21 to the first position, the capstan 75 is slightly retracted relatively, and the tension spring 77 is slightly stretched. As a result, the capstan 75 is pressed onto the pinch roller 10 via the magnetic tape 5 by the stretching force stored by the expansion of the tension spring 77.
g Operating Mechanism (Figs. 2 to 4 and 12 to 21)
   Reference numeral 78 denotes an operating mechanism which is composed of a play lever for establishing the play mode for recording and/or playback of the magnetic tape 5; an FF lever for establishing the FF mode for fast-forwarding or search of the magnetic tape 5; a REW lever for establishing the REW mode for rewinding the magnetic tape 5; a lock lever for locking either of the mode establishing levers depressed into its mode establishing position; a release lever having a function of releasing the lock by the lock lever to establish the stop mode and a function of executing cassette ejection; a head drum moving lever moved by the play lever or the like to move the head base 53; a head drum withdrawal lever for moving the head base 53 to the third position upon loading and ejection of a tape cassette; an intermediate lever for selectively switching the two functions of the release lever; and a limiter spring and a return spring provided to the play lever.
g-1 Head Drum Moving Lever (Figs. 2, 4 and 12 to 21)
   Reference numeral 79 denotes a head drum moving lever.
   The head drum moving lever 79 is elongated in the right/left direction and has an intermediate portion offset in the form of a channel as seen from the right side. Thus a left half portion thereof is located in a slightly higher position than a right half portion thereof, and a position thereof which is slightly right with respect to the intermediate portion is pivotally supported by a support shaft 80 to the right side of the bottom plate 15 of the main chassis 12. A coupling pin 81 is upstanding from the left end portion of the head drum moving lever 79 and slidably engages the elongated engage hole 62 of the head base 53. Therefore, pivotal movement of the head drum moving lever 79 causes the coupling pin 81 to move substantially in the front/rear direction, which, in turn, causes the head base 53, i.e., the head drum 21, to move in the front/rear direction.
   A portion 79a to be pressed is provided in the front edge of the head drum moving lever 79 at a central but slightly left position of the pivotal support point of the head drum moving lever 79. Further, the head drum moving lever 79 is provided with, at the right end portion thereof, a vertically standing stopper pin 82 and an upstanding spring engage member 79b.
   The head drum moving lever 79 is urged by the play lever to the advanced position shown in Fig. 13 for establishing the play mode, and it is urged by the release lever, described later, or the like to the retracted position shown in Fig. 15 for cassette ejection in which the cassette holder 44 is moved to the ejecting position. Otherwise, the head drum moving lever 79 is held in the stop position shown in Fig. 12. The head drum 21 is held in the second position when the head drum moving lever 79 is in the stop position, but it is moved to the first position by movement of the head drum moving lever 79 to the advanced position, and to the third position by movement of the head drum moving lever 79 to the retracted position.
g-2 Play Lever, Limiter Spring, Return Spring and Others (Figs. 2 to 4 and 12 to 20)
   g-2-a Construction
      Reference numeral 83 denotes the play lever which is composed of a main lever slidable in the front/rear direction, a sublever supported to the main lever to be slidable in the front/rear direction and pivotal substantially in the right/left direction, and a return spring rove between the main lever and the sublever, and others. A limiter spring is rove between the sublever and the head drum moving lever 79 to press the head drum 21 to the cassette casing 3.
      Reference numeral 84 indicates the main lever in the form of a plate elongated in the front/rear direction. The main lever 84 has elongated guide holes 84a provided in a rear right portion and a front end portion thereof and elongated in the front/rear direction. The elongated guide holes 84a slidably accept guide pins 85 vertically standing from right end portions of the bottom plate 15 of the main chassis 12 so as to be slidable over a limited length in the front/rear direction. Further, the main lever 84 is biased forwardly by a tension spring 88 which couples a spring engage member 87 extending from a front end portion of the right side edge 86 of the main lever 84 and the main chassis 12 so as to be held in a non-depressed position shown in Fig. 12 unless it is urged rearward.
      Reference numeral 89 refers to an arm member extending substantially to the left from a front end position of the main lever 84 and having a locked pin 89a upstanding from its distal end.
      A cutout 90 elongated in the front/rear direction is provided at a position slightly rearward of a middle point of the right side edge 86. The rear end portion of the right side edge 86 is located in a slightly left position of the remainder, and a spring hook member 91 extends upward therefrom. Further, a substantially channel-shaped engage cutout 92 is provided in a portion of the right side edge 86 continuously extending forwardly from the spring hook member 91. A front edge 92a of the engage cutout 92 behaves as a coupling edge for coupling an engage member of the sublever which will be described later.
      Reference numeral 93 denotes a push button attached to the front end of the main lever 84.
      Note that the lower end of the stopper pin 82 of the head drum moving lever 79 is located in the cutout 90.
      Reference numeral 94 refers to the sublever whose length is longer than one third of the main lever 84. The sublever 94 has an elongated engage hole 95 extending in the front/rear direction in its front end portion, and has an elongated hole 96 to be guided in a rear position of the sublever 94. A confronting member 95a extends vertically from the rear end of the elongated engage hole 95. A middle portion 96a of the elongated hole 96 to be guided is slanted to the right progressively in the forward direction whereas the remainder extends in the front/rear direction. Reference numeral 97 refers to a spring hook member upstanding from a front end portion of the left side edge of the sublever 94, numeral 98 to a spring hook member upstanding from a rear end portion of the right side edge of the sublever 94, and numeral 99 to an engage member vertically standing from the rear edge of the sublever 94.
      The sublever 94 having the said construction is laid over the upper surface of the main lever 84, with its elongated hole 96 slidably accepting rear one of two guide pins 85 supporting the main lever 84, and with its elongated engage hole 95 slidably accepting the stopper pin 82 of the head drum moving lever 79. A tension spring 100 (hereinafter called a return spring) bridges the front spring hook member 97 of the sublever 94 and the spring hook member 91 behind the main lever 84. A tension spring 101 (hereinafter called a limiter spring) bridges the rear spring hook member 98 of the sublever 94 and the spring hook member 79b of the head drum moving lever 79.
      Note that tension forces of the return spring 100 and the limiter spring 101 are so determined that the force of the limiter spring 101 is more intensive than that of the return spring 100.
      As a result of the tension force of the limiter spring 101 applied between the right end portion of the head drum moving lever 79 and the sublever 94, the confronting member 95a of the sublever 94 engages the stopper pin 82 of the head drum moving lever 79 substantially in the front/rear direction, and the tension force of the return spring 100 applied to the main lever 84 and the sublever 94 causes the confronting member 95a of the sublever 94 to engage the rear edge 90a (hereinbelow called a confronting edge) of the cutout 90 of the main lever 84.
      When the main lever 84 is in the non-depressed position, the head drum moving lever 79 is held in the stop position, and the head drum 21 is held in the second position, accordingly.
      In the state, the elongated guide hole 96 to be guided of the sublever 94 accepts the guide pin 85 in a portion thereof which connects the middle portion 96a to the rear portion 96b, and the engage member 99 thereof approaches the engage edge 92a of the engage cutout 92 of the main lever 84 from the right to be in substantial alignment therewith.
   g-2-b Pressure Contact of the Head Drum and Release thereof (Figs. 19 and 20)
      As the main lever 84 is progressively pushed rearward from the state, the sublever 94 is moved rearward by a pulling force applied to the spring hook member 97 thereof from the return spring 100, and it is pivoted in the counterclockwise direction as seen from the upper side because the side edge of the middle portion 96a of the elongated hole 96 to be guided is urged by the guide pin 85 in a relatively forward, slightly oblique left direction. As a result, as shown in Fig. 19B, the engage member 99 of the sublever 94 enters the engage cutout 92 of the main lever 84 and engages the engage edge 92a thereof.
      Thereafter, the engage edge 92a urges the engage member 99 rearward.
      The head drum moving lever 79 is pivoted in the counterclockwise direction because of movement of the stopper pin 82 thereof following the confronting member 95a of the sublever 94, and the head base 53 is moved thereby forwardly.
      When the main lever 84 has further moved rearward and reached the position shown in Fig. 19C, the head drum moving lever 79 reaches the advanced position whereas the head drum 21 reaches the first position. Then the confronting edges 24a and 25a engage the contact surfaces 9 of the cassette case 3 to prevent forward movement of the head base 53. As a result, the head drum moving lever 79 is prevented from further counterclockwise pivotal movement.
      Rearward movement of the main lever 84 is continued until arrival at the mode establishing position shown in Fig. 19D which is slightly behind the position. Therefore, after the pivotal movement of the head drum moving lever 79 is prevented, the contact member 95a of the sublever 94 is separated from the stopper pin 82 of the head drum moving lever 79, with the limiter spring 101 being stretched as shown in Fig. 19D.
      The stretching force of the expanded limiter spring 101 gives the head drum moving lever 79 a counterclockwise pivotal force which, in turn, causes the confronting edges 24a and 25a of the head drum 21 to be brought into pressure contact with the contact surfaces of the cassette casing 3.
      The main lever 84, which has depressed into the position, is locked there by the lock lever which will be described later. When the lock of the main lever 84 is released, it is moved to the original non-depressed position by the stretching force of the tension spring 88.
      While the main lever 84 is returned to the non-depressed position, the contact member 95a of the sublever 94 first contacts the stopper pin 82 of the head drum moving lever 79 to release the pressure contact with the cassette casing 3 of the head drum 21; the head drum moving lever 79 is pivoted in the clockwise direction because of a forward pressing force applied to the stopper pin 82 from the contact member 95a of the sublever 94 which moves forwardly after the state; the side edge of the middle portion 96a of the elongated hole 96 to be guided of the sublever 94 is urged by the guide pin 85 in a relatively rear, slightly right oblique direction to cause the sublever 94 to pivot in the clockwise direction, with its engage member 99 getting out of the engage cutout 92 to the right; and, upon arrival of the main lever 84 at the non-depressed position, the head drum moving lever 79 is moved to the stop position to return the head drum 21 to the second position.
   g-3 Release Lever and Lock Lever (Figs. 2, 3, 12 to 18 and 21)
      Reference numeral 102 refers to a release lever. In the state where the play lever 83 is depressed into the mode establishing position, or the FF or REW lever, described later, is depressed into its mode establishing position, namely, in the operation mode where the magnetic tape 5 runs, the release lever 102 behaves as a stop lever to release the operation mode and establish the stop mode. In the stop mode, however, the release lever 102 behaves as an ejection lever to execute cassette ejection.
      The release lever 102 is supported to the lower surface of the main chassis 12 at a slightly separated position to the right from the main lever 84 to be slidable over a predetermined length. The release lever 102 is biased forwardly by resilient means not shown, and has a push button 103 attached to the front end thereof and a pressing projection 104 upstanding from the right side edge thereof.
      Note that the rear edge 105 of the release lever 102 behaves as a pressing edge for urging the intermediate lever which will be described later.
      Reference numeral 106 refers to a lock lever in the form of a plate elongated in the right/left direction and supported for sliding movement in the right/left direction at a front end position of the bottom plate 15 of the main chassis 12. The lock lever 106 is biased to the left by resilient means not shown.
      Reference numeral 107 denotes a hole which is formed in a right position of the lock lever 106 and elongated in the front/rear direction. The lock lever 106 has, along its right side edge, an edge 107a to be pressed which is slanted to the left progressively in the rear direction.
      The pressing projection 104 of the release lever 102 is located in the hole 107 of the lock lever 106 and engages the front end portion of the right side edge of the hole 107. When the release lever 102 is depressed rearward, the pressing projection 104 urges the edge 107a to be pressed of the lock lever 106 to move the lock lever 106 to the right against the stretching force applied thereto. When the release lever 102 returns to its original position due to the tension force applied thereto, the lock lever 106 is also moved to the left and returned to its original position under the stretching force applied thereto.
      A lock click 109 is formed to extend to the left from the left side edge of a projection 108 extending rearward from the right end of the lock lever 106. A rear edge 109a of the lock click 109 is used as a lock edge extending in the right/left direction. An edge 109b extending forwardly from the left end of the lock edge 109a behaves as an edge to be pressed which is slanted to the right progressively in the front direction.
      When the play lever 83 is located in the non-depressed position, the locked pin 89a thereof substantially engages a front portion of the edge 109b to be pressed of the lock click 109. When the play lever 83 is depressed, its locked pin 89a urges the edge 109b of the lock lever 106 to move the lock lever 106 to the right. When the play lever 83 has reached its mode establishing position, the locked pin 89a is disengaged from the edge 109b rearward, so that the lock lever 106 moves to the left under a stretching force applied thereto, and its lock edge 109a is located in front of the pin 89a to be locked. As a result, even after the rearward urging force to the play lever 83 is removed, the locked pin 89a is engaged by the lock edge 109a of the lock lever 106 from the back thereof, and the play lever 83 is locked in the mode establishing position.
      When the release lever 102 is pushed in the state where the play lever 83 is locked in the mode establishing position, the lock lever 106 moves to the right as explained above, which causes the lock edge 109a located in front of the pin 89a of the play lever 83 to move to the right therefrom and permits the play lever 83 to return to the non-depressed position under the biasing force of the tension spring 88.
   g-4 REW Lever and FF Lever (Figs. 2, 3 and 12 to 18)
      Reference numeral 110 denotes a REW lever which is supported to the lower surface of the main chassis 12 on the left side of the release lever 102 to be slidable in the front/rear direction. A forward moving force is applied to the REW lever 110 by resilient means not shown. A locked member 110a to be locked and a pressing member 110b are formed to project from the REW lever 110.
      Reference numeral 111 denotes a hole which is formed in the lock lever 106 on the left side of the hole 107 and elongated in the front/rear direction. A lock click 112 is formed to project to the left from the right side edge of the hole 111. A rear edge 112a of the lock click 112 behaves as a lock edge which extends in the right/left direction. An edge 112b which extends forwardly from the left edge of the lock edge 112a behaves as an edge to be pressed which is slanted to the right progressively in the front direction.
      When the locked member 110a of the REW lever 110 is located in the hole 111 of the lock lever 106 and the REW lever 110 is in the non-depressed position shown in Fig. 12, the locked member 110a is opposed to the edge 112b to be pressed of the lock click 112 from the front side. When the REW lever 110 is depressed, the locked member 110a presses the edge 112b of the lock click 112, which causes the lock lever 106 to move to the right. When the REW lever 110 has reached the mode establishing position shown in Fig. 16, the locked member 110a is removed from the edge 112b to the rear side, which causes the lock lever 106 to move to the left under a stretching force applied thereto and causes the lock edge 112a is located in front of the locked member 110a. As a result, even after the rearward pressing force is removed from the REW lever 110, the locked member 110a is engaged by the lock edge 112a from the rear side, and the REW lever 110 is lockingly held in the depressed position.
      While the REW lever 110 moves from the non-depressed position to the mode establishing position, its pressing member 110b escapes from the cam edge 40 of the REW gear arm 38 to the rear side, which causes the REW gear arm 38 to be pivoted in the counterclockwise direction under a tension force of the tension spring 41 and causes the REW gear 39 to be brought into engagement with the relay gear 72. When the release lever 102 is depressed from this state, the lock lever 106 is moved toward the unlocking direction to release the lock, which causes the REW lever 110 to return from the mode establishing position to the non-depressed position.
      Meanwhile, the pressing member 110b presses the cam edge 40 of the REW gear arm 38 to the front side, and forces the REW gear arm 38 to pivot in the clockwise direction against the stretching force of the tension spring 41 to separate the REW gear 39 from the relay gear 72.
      Reference numeral 113 denotes an FF lever which is supported to the lower surface of the main chassis 12 on the left side of the REW lever 110 to be slidable in the front/rear direction. A forward moving force is applied to the FF lever 113 by resilient means not shown. A member 113a to be locked and a pressing member 113b are formed to project from the FF lever 113 respectively.
      Reference numeral 114 denotes a hole which is formed in the lock lever 106 on the left side of the hole 111 and elongated in the front/rear direction. A lock click 115 is formed to project to the left from the right side edge of the hole 114. A rear edge 115a of the lock click 115 behaves as a lock edge extending in the right/left direction. An edge 115b extending forwardly from the left end of the edge 115a behaves as an edge to be pressed which is slanted to the right progressively in the front direction.
      When the member 113a of the FF lever 113 is located in the hole 114 of the lock lever 106 and the FF lever 113 is located in the non-depressed position shown in Fig. 12, the locked member 113a is opposed to the edge 115b of the lock click 115 from the front side. When the FF lever 113 is depressed, the locked member 113a presses the edge 115b of the lock click 115, which causes the lock lever 106 to be moved to the right. When the FF lever 113 has reached the mode establishing position shown in Fig. 17, the locked member 113a is removed from the edge 115b to the rear side, which causes the lock lever 106 to move to the left under the stretching force applied thereto and causes the lock edge 115a to be located in front of the locked member 113a. As a result, even after the rear pressing force is removed from the FF lever 113, the member 113a is engaged by the lock edge 115a from the rear side to lockingly hold the FF lever 113 in the mode establishing position.
      While the FF lever 113 moves from the non-depressed position to the mode establishing position, the pressing member 113b escapes from the cam edge 36 of the FF gear arm 34, which permits the FF gear 34 to pivot in the clockwise direction under the stretching force of the tension spring 37 and bring the FF gear 35 into engagement with the large gear 71a of the relay gear 71. When the release lever 102 is depressed from this state, the lock lever 106 is moved in the unlocking direction to release the lock, which permits the FF lever 113 to return from the mode establishing position to the non-depressed position. Meanwhile, the pressing member 113b presses the cam edge 36 of the FF gear arm 34 forwardly, and forces the FF gear arm 34 to pivot in the counterclockwise direction against the stretching force of the tension spring 37 to separate the FF gear 35 from the large gear 71a of the relay gear 71.
   g-5 Head Drum Withdrawal Means
      g-5-a Head Drum Withdrawal Lever and Intermediate Lever (Figs. 3, 4, 12 to 18 and 21)
         Reference numeral 116 denotes a head drum withdrawal lever which has, among others, a function of withdrawing the head drum 21 by cooperating with an intermediate lever, described later, to move the head base 53 rearward to move the head drum 21 to the third position, and a function of locking the cassette holder 44 in the loading position.
         The head drum withdrawal lever 116 is in the form of an elongated plate which is long in the front/rear direction, and it is supported to the lower surface of the main chassis 12 at a position between the main lever 84 and the release lever 102 for slidable movement in the front/rear direction over a predetermined length. A forward moving force is applied to the head drum withdrawal lever 116 by a pivotal force applied to a holder pressing lever which will be described later. Reference numeral 117 refers to a stopper edge which is a middle to front-side portion of the left side edge of the head drum withdrawal lever 116, and 118 refers to a support member which projects to the left from a position of the left side edge of the head drum withdrawal lever 116 closer to the front side than the stopper edge 117. A support shaft 119 is attached to stand from a substantially central position of the support member 118.
         Reference numeral 120 denotes a spring hook member which is upstanding from a distal end of a portion which projects slightly to the left from a substantially middle portion of the left side edge of the head drum withdrawal lever 116.
         Note that a rear end portion 121 of the head drum withdrawal lever 116 behaves as a tall member to be locked which extends upwardly.
         Reference numeral 122 denotes an intermediate lever whose central portion is pivotally supported by a support shaft 119 of the head drum withdrawal lever 116. The intermediate lever 122 extends substantially in the front/rear direction, with its front end having a member 123 to be pressed which extends vertically therefrom, and its rear end having a pressing member 124 upstanding therefrom. A restriction member 125 is formed to extend vertically from a substantially intermediate position in the front/rear direction of the rear right side edge of the intermediate lever 122.
         A spring hook portion 124a is provided on an upper end portion of the pressing member 124. A tension spring 126 is rove between the spring hook portion 124a and the spring hook member 120 of the head drum withdrawal lever 116 to exert a clockwise pivotal force to the intermediate lever 122 as seen from the upper side. Thus the intermediate lever 122 is normally held to extend substantially in the front/rear direction, with the restriction member 125 being in contact with the stopper edge 117 of the head drum withdrawal lever 116 (this configuration is hereinbelow called a relay position) (see Fig. 12). When the head drum withdrawal lever 116 is in a standby position shown in Fig. 12, and the intermediate lever 122 is in the relay state, the member 123 of the intermediate lever 122 is opposed in a close position to the pressing edge 105 of the release lever 102 from the rear side, and the pressing member 124 is opposed in a close position to the portion 79a of the head drum moving lever 79 from the front side.
      g-5-b Intermediate Lever Switching Means (Figs. 12 to 18)
         Reference numeral 127 denotes a pressing member which extends to the left from a substantially middle portion of the left side edge of the main lever 84. A left end 127a of its rear side edge is formed to be a pressing edge which is slanted in the forward direction progressively in the left direction. A left side edge 127b of the pressing member 127 is used as a holding edge extending in the front/rear direction.
         Reference numeral 128 denotes a changeover slider in the form of a plate elongated in the right/left direction. The changeover slider 128 is supported to a front end portion of the lower surface of the bottom plate 15 of the main chassis 12 to be movable in the right/left direction over a predetermined extent. A tension spring 129 rove between the main chassis 12 and the changeover slider 128 exerts a leftward moving force to the changeover slider 128. A right end edge 130 of the changeover slider 128 is formed to be a pressing edge which is slanted to the left progressively in the rear direction. Right and left isolated projections 131a and 131b to be pressed having a substantially hemispherical shape are formed to extend upwardly in a middle portion in the right/left direction of the changeover slider 128.
         A rear end right side edge 110c of the REW lever 110 and a rear end right side edge 113c of the FF lever 113 are formed to be pressing edges which are slanted to the left progressively in the rear direction. These pressing edges 110c and 113c are opposed to contact the projections 131a and 131b of the changeover slider 128 from the left front side.
         Therefore, when the REW lever 110 or the FF lever 113 is depressed to the mode establishing position, the pressing edge 110c or 113c presses the projection 131a or 131b in a rightward oblique rear direction, and causes the changeover slider 128 to move to the right.
         As long as the changeover slider 128 is not pressed to the right, the pressing edge 130 of the changeover slider 128 is in a closely opposed position from the left side to a moving track of the member 123 of the intermediate lever 122 located in the relay position.
         When the head drum withdrawal lever 116 is in the advanced position, and the intermediate lever 122 is in the relay position, the pressing edge 127a of the main lever 84 located in the non-depressed position is in a closely opposed position from the front side to the restriction member 125 of the intermediate lever 122. In addition, the pressing edge 130 of the changeover slider 128, which has not been moved to the right, is in a closely opposed position from the left side to the lower end of the member 123 of the intermediate lever 122.
      g-5-c Stop Function of the Release Lever (Fig. 14)
         While the play lever 83 is moved to the mode establishing position from the state, the pressing edge 127a presses the restriction member 125 of the intermediate lever 122 in a rear left direction, and causes the intermediate lever 122 to pivot in the counterclockwise direction against the stretching force of the tension spring 126. Further, along with the retraction of the play lever 83, the restriction member 125 contacts the holding edge 127b of the main lever 84 to hold the intermediate lever 122 in a non-relay position, shown in Fig. 13, slightly pivoted in the counterclockwise direction from the relay position,
         When the intermediate lever 122 is in the non-relay position, as shown in Fig. 13, the member 123 to be pressed is located rightward offset from the moving track of the pressing edge 105 of the release lever 102, and the pressing member 124 is located leftward offset from the moving track of the member 79a of the head drum moving lever 79.
         As a result, when the release lever 102 is depressed to release the play mode established by movement of the play lever 83 to the mode establishing position as well as movement of the head drum 21 to the first position, the pressing edge 105 does not press the member 123 of the intermediate lever 122, as shown in Fig. 14, resulting in air swishing, and it only results in that the lock lever 106 is moved to the right, i.e., in the unlocking direction, to return the play lever 83 to the non-depressed position to return the head drum 21 to the second position. Then the intermediate lever 122 is returned to the relay position.
         On the other hand, when the REW lever 110 or the FF lever 113 has moved to the mode establishing position, the changeover slider 128 is moved to the right as explained above. As a result, as shown in Figs. 16 and 17, the pressing edge 130 of the changeover slider 128 presses the member 123 of the intermediate lever 122 to move the intermediate lever 122 to the non-relay position.
         Therefore, when the release lever 102 is depressed to release the mode from the state where the FF mode or the REW mode has been established, the pressing edge 105 of the release lever 102, again, does not press the member 123 of the intermediate lever 122, resulting in air swishing, and it only results in that the lock lever 106 is moved in the unlocking direction to permit the REW lever 110 or the FF lever 113 to return to the non-depressed position. Then the changeover slider 128 returns to the left, and the intermediate lever 122 is returned to the relay position.
         Thus the release lever 102 behaves as a stop lever for releasing a current operation mode and establishing the stop mode under a state where an operation mode such as play mode, FF mode, REW mode, etc. has been established.
      g-5-d Ejecting Function of the Release Lever (Fig. 15)
         As explained above, when loading or ejection of the tape cassette 2 is executed, in other words, when the cassette holder 44 is moved between the ejecting position and the loading position, the head drum 21 is moved to the third position.
         This movement is executed by depressing the release lever 102 in the stop mode.
         More specifically, in the stop mode, the head drum withdrawal lever 116 is in the standby position, and the intermediate lever 122 is in the relay position. Therefore, when the release lever 102 is depressed from this state, the pressing edge 105 presses the member 123 of the intermediate lever 122 rearward, as shown in Fig. 15. Then the intermediate lever 122 is moved rearward together with the head drum withdrawal lever 116. During this movement, the pressing member 124 of the intermediate lever 122 presses the member 79a of the head drum moving lever 79 substantially rearward and forces the head drum moving lever 79 to pivot in the clockwise direction. As a result, the head base 53 is moved rearward, and the head drum withdrawal lever 116 is moved to the depressed position shown in Fig. 15. Then the head drum moving lever 79 reaches the retracted position, and the head drum 21 is moved to the third position, accordingly.
         Note that, as shown in Fig. 11, when the head drum 21, having reached the third position, is spaced by a certain amount rearward from the cassette casing 3, and therefore withdraws to the exterior of the cassette casing 3 when the head drum moving lever 79 has come to a substantially middle position between the stop position and the retracted position. That is, the head drum 21 withdraws to the exterior of the cassette casing 3 before the head drum withdrawal lever 116 reaches the depressed position.
         Note that the lock of the cassette holder 44 in the loading position is released in response to the rearward movement of the head drum withdrawal lever 116 (this release will be described later), which causes the cassette holder 44 to move to the ejecting position, which, in turn, prevents the head drum withdrawal lever 116 from returning forwardly (this prevention will also be described later). As a result, the head drum moving lever 79 is locked in the retracted position, and the head drum 21 is held in the third position.
         Thus the release lever 102 behaves as an ejecting lever, in the stop mode, for withdrawing the head drum 21 out of the tape cassette 2 and for executing cassette ejection.
   g-6 Operating Impression during Ejection (Fig. 15)
      As described above, when the release lever 102 is depressed in the stop mode, the head drum moving lever 79 is pivoted from the stop position to the retracted position to bring the head drum 21 to the third position.
      When the head drum moving lever 79 moves to the retracted position, its right end moves substantially in the front direction, which results in that the spring hook member 79b pulls the limiter spring 101 forwardly. Since the stretching force of the limiter spring 101 is more intensive than that of the return spring 100 rove between the sublever 94 and the main lever 84, the sublever 94 is moved following the right end of the head drum moving lever 79, with its contact member 95a being held in contact with the stopper pin 82 of the head drum moving lever 79.
      Therefore, when the head drum moving lever 79 moves to the retracted position, the return spring 100 is expanded, as shown in Fig. 15, but the limiter spring 101 is never stretched.
      As a result, when the play lever 83 is depressed to establish the play mode, the limiter spring 101 having a more intensive stretching force is stretched to exert a pressure contact force for bringing the head drum 21 into pressure contact with the cassette casing 3. In contrast, when the release lever 102 is depressed to execute cassette ejection, the return spring 100 having a less intensive stretching force is stretched. Therefore, as compared to a construction in which the limiter spring is rove between a play lever of a single sheet structure and the head drum moving lever, the load received upon depressing the release lever 102 is decreased significantly. As a result, while ensuring a necessary force for pressure contact of the head drum, the operational impression upon performing ejection can be light-weighted.
      Note that when the head drum withdrawal lever 116 returns to the standby position from the state where the head drum moving lever 79 is locked in the retracted position, rearward pressure of the intermediate lever 122 is removed from the head drum moving lever 79, which permits the head drum moving lever 79 to pivot in the counterclockwise direction and return to the stop position under the stretching force of the return spring 100, which, in turn, moves the head drum 21 to the second position.
   h Cassette Ejecting Mechanism (Figs. 2 to 4, 12 to 18 and 21)
      Reference numeral 132 denotes a cassette ejecting mechanism which is composed of the cassette holder 44, head drum withdrawal lever 116, holder pressing lever and others.
      h-1 Mutual Lock between the Cassette Holder and the Head Drum Withdrawal Lever
         When the cassette holder 44 is in the loading position, the lower side edge 46e of its portion 46d to be locked, i.e., the rear end portion 46d of the right arm 46, represents a substantially horizontal orientation extending in the front/rear direction as shown in Fig. 4.
         The right arm 46 is then located just above a substantially middle portion in the width direction of the head drum withdrawal lever 116, and the upper end of the lock portion 121, which is a rear end portion of the head drum withdrawal lever 116, is located substantially in the same level as the lower side edge 46e of the portion 46d of the cassette holder 44. When the head drum withdrawal lever 116 is held in the standby position, its lock portion 121 is located under the position slightly forward of the rear end of the portion 46d as shown in Fig. 4.
         In this state, since the downward pivotal movement of the portion 46d is prevented by the lock portion 121, the cassette holder 44 is prevented from moving toward the ejecting position and lockingly held in the loading position.
         When the head drum withdrawal lever 116 is moved to the depressed position from the state, as shown by an alternate long and two short dashes line in Fig. 21A, the lock portion 121 is moved to a position offset rearward from the pivotal track of the rear end edge 46b of the portion 46d of the cassette holder 44.
         As a result, since prevention of downward movement of the member 46d by the lock portion 121 is released, the cassette holder 44 is moved to the ejecting position under the stretching force of the scissor-shaped spring 50. When the cassette holder 44 has moved to the ejecting position, the rear end of the portion 46d, as shown in Fig. 21B, comes to a position slightly lower than the support shaft 48, which is the pivotal center of the cassette holder 44, where it is located in front of the lock portion 121 of the head drum withdrawal lever 116. Then, forward movement of the lock portion 121 is prevented by the lock portion 46 of the cassette holder 44, and the head drum withdrawal lever 116 is lockingly held in the depressed position.
         When the cassette holder 44 is located in the loading position, and the head drum withdrawal lever 116 is in the standby position, the cassette holder 44 is locked in the loading position by the lock portion 121 of the head drum withdrawal lever 116. When the head drum withdrawal lever 116 is moved from the state to the depressed position (this movement is effected by depressing the release lever 102 in the stop mode, as explained above), the head drum 21 is first withdrawn from the cassette casing 3; immediately thereafter, the head drum withdrawal lever 116 reaches the depressed position, with the head drum moving lever 79 reaching the retracted position; the head drum 21 is responsively moved to the third position; substantially at the same time, the cassette holder 44 is moved to the ejecting position; and the head drum withdrawal lever 116 is locked in the depressed position, with the head drum 21 being held in the third position.
         When the cassette holder 44 reaches the ejecting position, the rear end edge 46b of the portion 46d to be locked is moved slightly forward of the lock portion 121 of the head drum withdrawal lever 116. As a result, when depression onto the release lever 102 is removed, the head drum withdrawal lever 116 is moved ahead up to a position where its lock portion 121 contacts the portion 46d to be locked. Therefore, the head drum moving lever 79 is slightly returned forward from the retracted position, and the head drum 21 is responsively moved slightly forward of the third position and held there.
         When the cassette holder 44 moves from the ejecting position to the cassette loading position, the lower end edge 46e of the portion 46d is removed upwardly from the upper end of the lock portion 121 of the head drum withdrawal lever 116, and prevention of forward movement of the lock portion 121 is released. As a result, the head drum withdrawal lever 116 is returned to the standby position, and the lock portion 121 is concurrently located under the portion 46d of the cassette holder 44. Thus the cassette holder 44 is locked in the loading position, and the head drum moving lever 79 concurrently returns to the stop position and moves the head drum 21 to the second position.
         As a result, since withdrawal of the head drum 21 from the cassette casing 3, locking and unlocking of the head drum 21 at the loading position with respect to the cassette holder 44, holding of the head drum 21 in the position withdrawn from the interior of the cassette casing 3 and insertion of the head drum 21 into the interior of the cassette casing 3 are all carried out sequentially by the cassette holder 44 and the head drum withdrawal lever 116, timings necessary for these motions are reliably controlled. Therefore, it is prevented that the tape cassette 2 hits the head drum 21 when the tape cassette is loaded or removed, and the mechanism therefor can be composed of minimum members.
      h-2 Holder Pressing Lever
         Reference numeral 133 denotes a holder pressing lever for holding the cassette holder 44 in a pressure contact state in the loading position.
         The holder pressing lever 133 is located between a front end portion of the side wall 13 and the cassette holding portion 45 of the cassette holder 44 brought into the loading position. A substantially central portion of the holder pressing lever 133 is pivotally supported on the side wall 13 by a support shaft 134. A coupling member 136 cut and raised from the head drum withdrawal lever 116 is pivotally interposed between two leg portions 135 formed at lower end portions of the holder pressing lever 133.
         A stopper member 137 extending rightward from a front end portion of the front side edge of the holder pressing lever 133 extends rightward beyond the side wall 13 through an elongated hole 138 formed in the side wall 13. A right end portion of the stopper member 137 is used as a spring hook portion.
         Reference numeral 139 denotes a torsion spring whose coil portion 139a engages the outer periphery of a spring support portion 140 extending rightward from the upper edge of the side wall 13 above the support shaft 134. Two arms 139b and 139c of the torsion spring 139 are resiliently contacted with the right end portion of the stopper member 137 and a spring hook portion 141 extending rightward from the lower edge of the side wall 13, respectively. A clockwise pivotal force as seen from the right side is applied to the holder pressing lever 133 by the stretching force of the torsion spring 139, so that, unless it is pressed in the counterclockwise direction, its stopper member 137 is held in a pressing position contacting an upper end edge of the elongated hole 138.
         Due to the pivotal force applied to the holder pressing lever 133, a forward pressing force is applied to the coupling member 136 of the head drum withdrawal lever 116, and this pressing force behaves as a force for moving the head drum withdrawal lever 116 to the standby position.
         Reference numeral 142 denotes a cutout formed to open rearward in an upper portion of the holder pressing lever 133. An upper edge 142a of the cutout 142 (hereinbelow called a "pressing edge") is located to intersect the pivotal track of the member 52 formed in the cassette holder 44 in a state where the holder pressing lever 133 is in the pressing position.
         When the head drum withdrawal lever 116 is in the standby position, the holder pressing lever 133 is held in the pressing position. When the head drum withdrawal lever 116 is moved rearward from the state, its coupling member 136 presses the leg portion 135 of the holder pressing lever 133 rearward, which causes the holder pressing lever 133 to be pivoted in the counterclockwise direction as seen from the right side. As a result, the pressing edge 142a moves forwardly out of the pivotal track of the pin 52 to be locked of the cassette holder 44. When the rearward pressing force is removed from the head drum withdrawal lever 116, the holder pressing lever 133 is permitted to return to the pressing position under the stretching force of the torsion spring 139, and the head drum withdrawal lever 116 is concurrently returned to the standby position.
         When the cassette holder 44 moves to the loading position from the state where the head drum withdrawal lever 116 has moved to the depressed position causing the cassette holder 44 to be placed in the ejecting position, the holder pressing lever 133 is moved to the pressing position where its pressing edge 142a engages the pin 52 of the cassette holder 44 from the upper side. Due to this engagement, the pin 52 is pressed substantially downward, and the cassette holder 44 is held in a pressure contact state in the loading position, accordingly.
         In the state shown by a solid line in Fig. 21A before the holder pressing lever 133 presses the pin 52 and where the lock portion 121 of the head drum withdrawal lever 116 is located under the portion 46d to be locked of the cassette holder 4, the cassette holder 44 is positioned slightly nearer to the ejecting position than the loading position. When pressure is applied from the holder pressing lever 133 to the pin 52 from the state, the cassette holder 44 is fully moved to the loading position, and it is held there.
         When ejecting operation is commenced from the state, with the head drum withdrawal lever 116 being moved rearward, the holder pressing lever 133 is first pivoted in the counterclockwise direction as seen from the right side, and its pressing edge 142a gets out of the pivotal track of the pin 52 (state shown by the solid line in Fig. 21A), the lock portion 121 of the head drum withdrawal lever 116 is subsequently moved out of the pivotal track of the portion 46d of the cassette holder 44, and the cassette holder 44 is moved to the ejecting position.
   i Operation
      Outline of the operation of the above-described tape player 1 is explained below.
      First for loading the tape cassette 2, the release lever 102 is depressed. Responsively, the member 123 to be pressed of the intermediate lever 122 is pressed by the pressing edge 105 of the release lever 102, causing the intermediate lever 122 together with the head drum withdrawal lever 116 to move rearward. The portion 79a to be pressed of the head drum moving lever 79 is pressed rearward by the pressing member 124 of the rearward moving intermediate lever 122. As a result, the head drum moving lever 79 is pivoted in the clockwise direction, the head base 53 is moved rearward, and the head drum 21 is moved to the third position.
      When the head drum withdrawal lever 116 is retracted, with its lock portion 121 getting out of the pivotal track of the portion 46d of the cassette holder 44 to the rear side, the cassette holder 44 is unlocked and moved to the ejecting position.
      When the tape cassette 2 is inserted into the cassette holder 44 located in the ejecting position, the front lid 11 is moved to the open position. The tape cassette 2 is reversible and, whichever direction it is inserted in the cassette holding portion 45, the front lid 11 is pivoted upwardly (see Fig. 4). Recording on the magnetic tape 5 is performed so that a slanted recording track is formed by so-called helical scan in one of two divided regions in the width direction.
      When the tape cassette 2 is brought to the loading position by pivoting the cassette holder 44 with the tape cassette 2 inserted therein downward and moving it to the cassette loading position, the head drum 21 is unlocked from the third position, and the head drum moving lever 79 is pivoted to the stop position by the stretching force of the return spring 100, causing the head drum 21 to reach the second position. This state shown in Fig. 12 is the stop state (stop mode) where the relay gears 71 and 72 are located apart from the play gear 30, FF gear 35 and REW gear 39.
      When the FF lever 113 is moved from the state to the mode establishing position, as shown in Fig. 17, the FF gear 35 engages the large gear 71a of the relay gear 71, and the drum motor 67 of the head drum 21 is rotated. As a result, the FF mode, in which the reel base 17 is rotated in the tape takeup direction at a high speed, is established.
      When the REW lever 110 is moved from the stop state to the mode establishing position, as shown in Fig. 16, the REW gear 39 engages the relay gear 72, and the drum motor 67 is rotated. Therefore, the REW mode, in which the reel base 18 is rotated in the tape takeup direction at a high speed, is established.
      When the head drum 21 is in the second position, the magnetic heads 23 move while maintaining light contact with the magnetic tape 5. Therefore, the search mode may also be established by concurrently reading signals by the magnetic heads 23 while feeding the magnetic tape 5 at a high speed as in the FF and REW modes.
      The high-speed running mode and the search mode may be established directly from another mode except the stop mode, because the lock lever 106 is moved in the unlocking direction upon depression of the FF lever 113 or REW lever 110, which causes the immediately preceding mode to be canceled and causes a mode responsive to depression of the FF lever 113 or REW lever 110 to be established.
      When the play lever 83 is subsequently moved to the mode establishing position, the head drum 21 is moved to the first position as describe above, and the small gear 71b of the relay gear 71 engages the large gear 30a of the play gear 30. At this time, the play gear arm 29 is slightly pivoted in the clockwise direction, and the tension spring 33 is stretched. As a result, the small gear 71b of the relay gear 71 and the large gear 30a of the play gear 30 are held in an appropriate pressure contact. Then the drum motor 67 is rotated, and reel base 17 is rotated in the tape takeup direction, and the recording and/or playback mode is established.
      The recording and/or playback mode is released by depression of the REW lever 110 or FF lever 113 and replaced by a mode corresponding to depression of the lever.
      The head drum withdrawal lever in the foregoing embodiment is composed of a part for performing withdrawal of the head drum from the interior of the tape cassette and a part having the lock portion, and these two parts are pivotally coupled. This is, however, only for incorporating in a single release lever both the function as the stop lever and the function as the ejecting lever. Therefore, construction of the head drum withdrawal lever in the invention need not be limited to such structure.

## Claims

1. A cassette ejecting mechanism of a tape player comprising:
cassette holder means (44) which is operative to guide a tape cassette (2) to an ejecting position permitting insertion and removal of the tape cassette and a cassette loading position permitting a tape to be driven and which is pivotal with respect to a chassis;
first biasing means (50) for biasing said cassette holder means (44) toward said ejecting position;
head base means (54) which supports magnetic head means (21) for recording or reproducing information signals on or from said tape and which is movably mounted to the chassis;
driving lever means (79) for moving said head base means (54) to a first position where said magnetic head means (21) is located outside said tape cassette and a second position where at least part of said magnetic head means (21) is located inside said tape cassette;
operating lever means (102) for ejection of the cassette which operating lever means is moveable with respect to the chassis;
intermediate lever means (116,122) which is moved in response to movement of said operating lever means (102) and which moves said driving lever means (79);
second biasing means (100) which biases said head base means (54) toward said second position;
wherein movement of said cassette holder means (44) toward said ejecting position by the first biasing means (50) is prevented by contacting a first part of a lock portion (121) of said intermediate lever means (116) with a first portion to be locked (46e) of said cassette holder means (44) when said cassette holder means (44) is in said cassette loading position; and
movement of said head base means (54) toward said second position by said second biasing means (100) being prevented by contacting a second part of the lock portion (121) of said intermediate lever means (116) with a second portion to be locked (46b) of said cassette holder means (44) when said cassette holder means (44) is in said ejecting position.

2. The cassette ejecting mechanism of a tape player according to claim 1, wherein said first portion to be locked (46e) of said cassette holder means (44) is formed on a short arm portion which is axially symmetrical of a long arm portion having a holding portion for holding the tape cassette with respect to a rotation axis of said cassette holder means (44).

3. The cassette ejecting mechanism of a tape player according to claim 1 or 2, wherein said second portion to be locked (46b) of said cassette holder means (44) is formed on a short arm portion which is axially symmetrical of a long arm portion having a holding portion for holding the tape cassette with respect to a rotation axis of said cassette holder means (44).

4. The cassette ejecting mechanism of a tape player according to claim 1, 2 or 3, wherein said first and second parts of the lock portion (121) are formed in positions in an intersecting relationship.

5. The cassette ejecting mechanism of a tape player according to any one of claims 1 to 4, wherein said driving lever means (79) is pivotally mounted on the chassis, and one end thereof is linked to said head base means (54).

6. The cassette ejecting mechanism of a tape player according to claim 5, wherein said second biasing means (100) has one end which biases said driving lever means (79).

7. The cassette ejecting mechanism of a tape player according to any one of claims 1 to 6, wherein pivotal second intermediate lever means (122) selectively engaging said operating lever means (102) is provided on said intermediate lever means (116), said second intermediate lever means (122) engaging and moving said driving lever means (79) only when said operating lever means (102) and said second intermediate lever means (122) are in engagement.

8. The cassette ejecting mechanism of a tape player according to claim 7, wherein said second intermediate lever means (122) is pivoted, by lever means moveable responsively to placement of operating lever means for play of FF/REW operating lever means, to a position incapable of engaging said operating lever means (102).

9. The cassette ejecting mechanism of a tape player according to any one of the preceding claims, wherein said second position is such that at least STOP mode and FF/REW mode are established.

10. The cassette ejecting mechanism according to any one of the preceding claims, wherein by moving operating lever means for play, through said driving lever means (79), said head base means (54) is set in a third position deeper inside said tape cassette than said second position to establish a recording or playback mode.

11. The cassette ejecting mechanism of a tape player according to any one of the preceding claims, wherein said magnetic head means (21) is composed of a head drum apparatus including a rotary head.

12. The cassette ejecting mechanism of a tape player according to claim 11, wherein said head base means (54) supports at least a capstan and supports a motor which drives said rotary head and said capstan by gears.

13. The cassette ejecting mechanism of a tape player according to any one of the preceding claims, wherein said cassette holder means (44) includes lid opening/closing means responsive to a motion for inserting or removing a tape cassette having an opening/closing lid to open and close said lid at said ejecting position.

14. The cassette ejecting mechanism of a tape player according to any one of the preceding claims, comprising pivotal lock lever means (133) which has one end for engagement with a portion to be locked (52) formed on a side plate portion of said cassette holder means (44) located in said cassette loading position and has the other end which engages an engaging portion (136) formed on said intermediate lever means (116), thereby to pivot in response to movement of said intermediate lever means (116) to unlock engagement with said portion to be locked (52).

## Patentansprüche

1. Kassettenauswurfmechanismus eines Bandabspielgeräts, mit:
einer Kassettenhaltereinrichtung (44), die eine Bandkassette (2) zu einer Auswurfposition führen kann, um ein Einführen und ein Entnehmen der Bandkassette zu erlauben, und zu einer Kassettenladeposition, um zu erlauben, daß ein Band angetrieben wird, und die in bezug auf ein Chassis drehbar ist;
einer ersten Vorspanneinrichtung (50), um die Kassettenhaltereinrichtung (44) in Richtung auf die Auswurfposition vorzuspannen;
einer Kopfbasiseinrichtung (54), die eine Magnetkopfeinrichtung (21) lagert, um Informationssignale auf oder aus dem Band aufzuzeichnen oder zu reproduzieren, und die verschiebbar auf dem Chassis befestigt ist;
einer Antriebshebeleinrichtung (79), um die Kopfbasiseinrichtung (54) zu einer ersten Position zu verschieben, wo die Magnetkopfeinrichtung (21) außerhalb der Bandkassette angeordnet ist, und zu einer zweiten Position, wo zumindest ein Teil der Magnetkopfeinrichtung (21) innerhalb der Bandkassette angeordnet ist;
einer Betätigungshebeleinrichtung (102), um die Kassette auszuwerfen, wobei die Betätigungshebeleinrichtung in bezug auf das Chassis verschiebbar ist;
einer Zwischenhebeleinrichtung (116, 122), die als Antwort auf eine Verschiebung der Betätigungshebeleinrichtung (102) verschoben wird und die die Antriebshebeleinrichtung (79) verschiebt;
einer zweiten Vorspannungseinrichtung (100), die die Kopfbasiseinrichtung (54) in Richtung auf die zweite Position vorspannt;
wobei die Verschiebung der Kassettenhaltereinrichtung (44) in Richtung auf die Auswurfposition durch die erste Vorspanneinrichtung (50) durch Kontaktieren eines ersten Teils eines Verriegelungsteils (121) der Zwischenhebeleinrichtung (116) mit einem ersten Verriegelungsteil (46e) der Kassettenhaltereinrichtung (44) verhindert wird, wenn die Kassettenhaltereinrichtung (44) in der Kassettenladeposition ist; und
eine Verschiebung der Kopfbasiseinrichtung (54) in Richtung auf die zweite Position durch die zweite Vorspanneinrichtung (100) durch Kontaktieren eines zweiten Teils des Verriegelungsteils (121) der Zwischenhebeleinrichtung (116) mit einem zweiten Verriegelungsteil (46b) der Kassettenhaltereinrichtung (44) verhindert wird, wenn die Kassettenhaltereinrichtung (44) in der Auswurfposition ist.

2. Kassettenauswurfmechanismus eines Bandabspielgeräts nach Anspruch 1, wobei der erste Verriegelungsteil (46e) der Kassettenhaltereinrichtung (44) auf einem kurzen Armteil gebildet ist, das axial symmetrisch zu einem langen Armteil ist, das ein Halteteil hat, um die Bandkassette in bezug auf eine Drehachse der Kassettenhaltereinrichtung (44) zu halten.

3. Kassettenauswurfmechanismus eines Bandabspielgeräts nach Anspruch 1 oder 2, wobei der zweite Verriegelungsteil (46b) der Kassettenhaltereinrichtung (44) auf einem kurzen Armteil gebildet ist, das axial symmetrisch zu einem langen Armteil ist, das ein Halteteil hat, um die Bandkassette in bezug auf eine Drehachse der Kassettenhaltereinrichtung (44) zu halten.

4. Kassettenauswurfmechanismus eines Bandabspielgeräts nach Anspruch 1, 2 oder 3, wobei das erste und zweite Teil des Verriegelungsteils (121) an Positionen in einer sich kreuzenden gegenseitigen Lage gebildet sind.

5. Kassettenauswurfmechanismus eines Bandabspielgeräts nach einem der Ansprüche 1 bis 4, wobei die Antriebshebeleinrichtung (79) drehbar auf dem Chassis befestigt ist und ein Ende davon mit der Kopfbasiseinrichtung (54) verbunden ist.

6. Kassettenauswurfmechanismus eines Bandabspielgeräts nach Anspruch 5, wobei die zweite Vorspanneinrichtung (100) ein Ende hat, welches die Antriebshebeleinrichtung (79) vorspannt.

7. Kassettenauswurfmechanismus eines Bandabspielgeräts nach einem der Ansprüche 1 bis 6, wobei eine zweite Dreh-Zwischenhebeleinrichtung (122), die wahlweise die Betätigungshebeleinrichtung (102) erfaßt, auf der Zwischenhebeleinrichtung (116) vorgesehen ist, wobei die zweite Zwischenhebeleinrichtung (122) die Antriebshebeleinrichtung (79) nur erfaßt und verschiebt, wenn die Betätigungshebeleinrichtung (102) und die zweite Zwischenhebeleinrichtung (122) in Eingriff sind.

8. Kassettenauswurfmechanismus eines Bandabspielgeräts nach Anspruch 7, wobei die zweite Zwischenhebeleinrichtung (122) - durch eine Hebeleinrichtung, die als Antwort auf ein Plazieren der Betriebshebeleinrichtung auf Wiedergabe einer Schnellen-Vorlauf-/Rückspul-Betätigungshebeleinrichtung verschiebbar ist - auf eine Position gedreht wird, wo sie nicht in der Lage ist, die Betätigungshebeleinrichtung (102) zu erfassen.

9. Kassettenauswurfmechanismus eines Bandabspielgeräts nach einem der vorhergehenden Ansprüche, wobei die zweite Position so ist, daß zumindest ein Stopp-Modus und ein Schneller-Vorlauf-/Rückspul-Modus eingerichtet sind.

10. Kassettenauswurfmechanismus eines Bandabspielgeräts nach einem der vorhergehenden Ansprüche, wobei durch Verschieben der Betätigungshebeleinrichtung auf Wiedergabe über die Antriebshebeleinrichtung (79) die Kopfbasiseinrichtung (54) in eine dritte Position versetzt wird, die tiefer innerhalb der Bandkassette ist als die zweite Position, um einen Aufzeichnungs- oder Wiedergabemodus einzurichten.

11. Kassettenauswurfmechanismus eines Bandabspielgeräts nach einem der vorhergehenden Ansprüche, wobei die Magnetkopfeinrichtung (21) aus einem Kopftrommelgerät einschließlich eines Drehkopfes besteht.

12. Kassettenauswurfmechanismus eines Bandabspielgeräts nach Anspruch 1, wobei die Kopfbasiseinrichtung (54) zumindest einen Kapstan lagert und einen Motor lagert, der den Drehkopf und den Kapstan über Zahnräder antreibt.

13. Kassettenauswurfmechanismus eines Bandabspielgeräts nach einem der vorhergehenden Ansprüche, wobei die Kassettenhaltereinrichtung (44) eine Klappenöffnungs-/Schließeinrichtung umfaßt, die auf eine Bewegung anspricht, um eine Bandkassette, die eine Öffnungs-/Schließklappe hat, einzuführen oder zu entfernen, um die Klappe in der Auswurfposition zu öffnen und zu schließen.

14. Kassettenauswurfmechanismus eines Bandabspielgeräts nach einem der vorhergehenden Ansprüche, welches eine Drehverriegelungshebeleinrichtung (133) umfaßt, die ein Ende hat, um einen zu verriegelnden Bereich (52) zu erfassen, welcher auf einem Seitenplattenbereich der Kassettenhaltereinrichtung (44) gebildet ist, die in der Kassettenladeposition angeordnet ist, und das andere Ende hat, welches ein Eingriffsteil (136) erfaßt, welches auf der Zwischenhebeleinrichtung (116) gebildet ist, um sich dadurch als Antwort auf eine Verschiebung der Zwischenhebeleinrichtung (116) zu drehen, um den Eingriff mit dem zu verriegelnden Bereich (52) zu entriegeln.

## Revendications

1. Mécanisme d'éjection de cassette d'un lecteur de bande, comprenant :
un support de cassette (44) qui est destiné à guider une cassette de bande (2) vers une position d'éjection permettant l'insertion et l'extraction d'une cassette de bande et une position de chargement de cassette permettant l'entraînement d'une bande, et qui peut pivoter par rapport à un châssis,
un premier dispositif de rappel (50) destiné à rappeler le support de cassette (44) vers la position d'éjection,
une base de tête (54) qui supporte un dispositif à tête magnétique (21) pour l'enregistrement ou la reproduction des signaux d'information de la bande et qui est monté afin qu'il soit mobile par rapport au châssis,
un dispositif à levier d'entraînement (79) destiné à déplacer la base de tête (54) vers une première position dans laquelle le dispositif à tête magnétique (21) se trouve en dehors de la cassette de bande et une seconde position dans laquelle une partie au moins du dispositif à tête magnétique (21) est placée à l'intérieur de la cassette de bande,
un dispositif (102) à levier de manoeuvre destiné à l'éjection de la cassette, ce dispositif à levier de manoeuvre étant mobile par rapport au châssis,
un dispositif à levier intermédiaire (116, 122) qui est déplacé lors du déplacement du dispositif à levier de manoeuvre (102) et qui déplace le dispositif à levier d'entraînement (79), et
un second dispositif de rappel (100) qui rappelle la base de tête (54) vers la seconde position,
dans lequel le déplacement du support de cassette (44) vers la position d'éjection par le premier dispositif de rappel (50) est empêché par contact d'une première partie d'une portion de blocage (121) du dispositif à levier intermédiaire (116) avec une première portion à bloquer (46e) du support de cassette (44) lorsque ce support de cassette (44) est dans la position de chargement de cassette, et
le déplacement de la base de tête (54) vers la seconde position par le second dispositif de rappel (100) est empêché par le contact d'une seconde partie de la portion de blocage (121) du dispositif à levier intermédiaire (116) avec une seconde portion à bloquer (46b) du support de cassette (44) lorsque le support de cassette (44) est dans la position d'éjection.

2. Mécanisme d'éjection de cassette d'un lecteur de bande selon la revendication 1, dans lequel la première portion à bloquer (46e) du support de cassette (44) est formée sur une courte portion de bras qui est axialement symétrique d'une longue portion de bras ayant une partie de support de la cassette de bande par rapport à l'axe de rotation du support de cassette (44).

3. Mécanisme d'éjection de cassette d'un lecteur de bande selon la revendication 1 ou 2, dans lequel la seconde portion à bloquer (46b) du support de cassette (44) est formée sur une partie de bras court qui est axialement symétrique d'une partie de bras long ayant une partie de support de la cassette de bande par rapport à l'axe de rotation du support de cassette (44).

4. Mécanisme d'éjection de cassette d'un lecteur de bande selon la revendication 1, 2 ou 3, dans lequel la première et la seconde partie de la portion de blocage (121) sont formées à des positions telles qu'elles se recoupent.

5. Mécanisme d'éjection de cassette d'un lecteur de bande selon l'une quelconque des revendications 1 à 4, dans lequel le dispositif à levier d'entraînement (79) est monté de manière pivotante sur le châssis, et une première extrémité de ce dispositif est reliée à la base de tête (54).

6. Mécanisme d'éjection de cassette d'un lecteur de bande selon la revendication 5, dans lequel le second dispositif de rappel (100) a une première extrémité qui rappelle le dispositif à levier d'entraînement (79).

7. Mécanisme d'éjection de cassette d'un lecteur de bande selon l'une quelconque des revendications 1 à 6, dans lequel un second dispositif pivotant à levier intermédiaire (122) qui coopère sélectivement avec le dispositif à levier de manoeuvre (102) est placé sur le dispositif à levier intermédiaire (116), le dispositif à levier intermédiaire (122) coopérant avec le dispositif à levier d'entraînement (79) et le déplaçant uniquement lorsque le dispositif à levier de manoeuvre (102) et le second dispositif à levier intermédiaire (122) sont en coopération.

8. Mécanisme d'éjection de cassette d'un lecteur de bande selon la revendication 7, dans lequel le second dispositif à levier intermédiaire (122) peut pivoter, sous l'action d'un dispositif à levier mobile à la suite de la disposition du dispositif à levier de manoeuvre, afin qu'il assure l'exécution par le dispositif à levier de manoeuvre d'avance rapide ou de réenroulement, vers une position dans laquelle il ne peut pas coopérer avec le dispositif à levier de manoeuvre (102).

9. Mécanisme d'éjection de cassette d'un lecteur de bande selon l'une quelconque des revendications précédentes, dans lequel la seconde position est telle qu'un mode d'arrêt et un mode d'avance rapide et de réenroulement au moins sont établis.

10. Mécanisme d'éjection de cassette d'un lecteur de bande selon l'une quelconque des revendications précédentes, dans lequel le déplacement du dispositif à levier de manoeuvre pour le fonctionnement, par l'intermédiaire du dispositif à levier d'entraînement (79), place la base de tête (54) dans une troisième position plus profondément à l'intérieur de la cassette de bande que la seconde position afin qu'un mode d'enregistrement ou de lecture soit établi.

11. Mécanisme d'éjection de cassette d'un lecteur de bande selon l'une quelconque des revendications précédentes, dans lequel le dispositif à tête magnétique (21) est composé d'un appareil à tambour à tête ayant une tête rotative.

12. Mécanisme d'éjection de cassette d'un lecteur de bande selon la revendication 11, dans lequel la base de tête (54) supporte au moins un cabestan et supporte un moteur qui entraîne la tête rotative et le cabestan à l'aide de pignons.

13. Mécanisme d'éjection de cassette d'un lecteur de bande selon l'une quelconque des revendications précédentes, dans lequel le support de cassette (44) a un dispositif d'ouverture-fermeture de couvercle commandé par le déplacement d'insertion ou d'extraction de la cassette de bande ayant un couvercle d'ouverture-fermeture destiné à ouvrir et fermer le couvercle à la position d'éjection.

14. Mécanisme d'éjection de cassette d'un lecteur de bande selon l'une quelconque des revendications précédentes, comprenant un dispositif à levier pivotant de blocage (133) qui a une première extrémité destinée à coopérer avec une partie à bloquer (52) formée sur une portion de plaque latérale du support de cassette (44) placé en position de chargement de cassette et a son autre extrémité qui coopère avec une portion de coopération (136) formée sur le dispositif à levier intermédiaire (116), afin qu'il pivote lors du déplacement du dispositif à levier intermédiaire (116) et provoque un déblocage de la coopération avec la partie à bloquer (52).
